# EUROPEAN PATENT APPLICATION

(11) **EP 4 832 566 A1**
(43) Date of publication of application: **28.10.2026**
(21) Application number: 24918289.0
(22) Date of filing: 16.12.2024
(51) Int. Cl.: H04W 28/06

(54) **COMMUNICATION METHOD AND APPARATUS**

(30) Priority: 17.01.2024 CN 202410075364
(71) Applicant: Huawei Technologies Co., Ltd., Shenzhen, Guangdong 518129 (CN)
(72) Inventor: DOU, Fenghui, Shenzhen, Guangdong 518129 (CN); XU, Haibo, Shenzhen, Guangdong 518129 (CN)
(74) Representative: Huawei European IPR
(86) International application number: PCT/CN2024/139599
(87) International publication number: WO 2025/152681

(57) **Abstract**

This application relates to a communication method and apparatus. A first apparatus performs header compression on a first data packet to obtain a second data packet. The first apparatus removes a check field in a header of the second data packet to obtain a third data packet. The first apparatus sends the third data packet. According to embodiments of this application, an information amount of the header of the second data packet is reduced, so that header transmission overheads are reduced, thereby helping improve network transmission performance.

## Description

### CROSS-REFERENCE TO RELATED APPLICATIONS

This application claims priority to Chinese Patent Application No. 202410075364.X, filed with the China National Intellectual Property Administration on January 17, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In internet protocol (internet protocol, IP) voice services such as voice over long term evolution (voice over long term evolution, VoLTE)/voice over new radio (voice over new radio, VoNR), a payload in an IP data packet has a size almost the same as a header, and is even smaller than the header. In this case, the header in the data packet occupies more resources than the payload, resulting in high air interface transmission overheads.

To reduce air interface transmission overheads, user equipment (user equipment, UE) and a base station may use a robust header compression (robust header compression, ROHC) technology to perform header compression on an IP data packet of a voice service on a user plane in an uplink and downlink data transmission process. ROHC compression is performed on the header, so that a 40-byte IP/user datagram protocol (user datagram protocol, UDP)/real-time transport protocol (real-time transport protocol, RTP) header may be compressed to 3 bytes (bytes) in an optimal case. It can be learned that, ROHC compression helps reduce header transmission overheads over an air interface and improve network transmission performance.

However, even if ROHC compression is performed, a 3-byte header still needs to be transmitted in an optimal case after compression. For a communication system with a small transmission bandwidth, header transmission overheads are still high.

### SUMMARY

Embodiments of this application provide a communication method and apparatus, to reduce header transmission overheads.

According to a first aspect, a first communication method is provided. The method may be performed by a first apparatus, and the first apparatus is, for example, a terminal apparatus or an access network apparatus. The terminal apparatus is, for example, a terminal device, another device including a function of the terminal device, or a chip system (or a chip) or another functional module. The chip system or the functional module can implement the function of the terminal device. The chip system or the functional module is, for example, disposed in the terminal device. The access network apparatus is, for example, an access network device, another device including a function of the access network device, or a chip system (or a chip) or another functional module. The chip system or the functional module can implement the function of the access network device. The chip system or the functional module is, for example, disposed in the access network device. Optionally, the access network device is, for example, a base station or another device in an access network. The method includes: performing header compression on a first data packet to obtain a second data packet; removing a check field included in a header of the second data packet to obtain a third data packet; and sending the third data packet.

In this embodiment of this application, the first apparatus may remove the check field in the header of the second data packet, to send a second data packet from which the check field is removed (that is, the third data packet). In this case, an information amount of the header of the second data packet is reduced, so that header transmission overheads are reduced, thereby helping improve network transmission performance.

In an optional implementation, the check field is a UDP checksum field. Alternatively, the check field may be another field used for check in the header of the second data packet. This is not limited.

In an optional implementation, before performing the header compression on the first data packet, the method includes: modifying a value of the check field in a UDP header of the first data packet to a first value. The first apparatus performs compression, and a second apparatus that receives the third data packet needs to perform decompression. When decompressing the received third data packet, the second apparatus may first fill the check field in a header of the third data packet, but the second apparatus may not know an actual value of the check field at this time. Therefore, both the first apparatus and the second apparatus may set a value of the check field to the first value, so that a compression process corresponds to a decompression process.

In an optional implementation, the method further includes: sending or receiving capability information, where the capability information indicates that removing the check field during transmission is supported. For example, if the first apparatus is a terminal apparatus, the first apparatus may send capability information of the terminal apparatus; or if the first apparatus is an access network apparatus, the first apparatus may receive the capability information (for example, the capability information is from the second apparatus, and the capability information is capability information of the second apparatus). The capability information may indicate whether a transmit end of the capability information supports removal of the check field during transmission. If the transmit end supports removal of the check field during transmission, the transmit end may perform the solution provided in this embodiment of this application.

In an optional implementation, the method further includes: sending or receiving a first message, where the first message indicates to activate a function of removing the check field during transmission. Removing a check field during transmission may be used as a function that may be activated or deactivated to flexibly apply the function. For example, if the first apparatus is a terminal apparatus, the first apparatus may receive the first message. For example, the first message is from an access network apparatus, and if the first apparatus receives the first message, the first apparatus may use the function. Otherwise, the function is considered as inactive. Alternatively, if the first apparatus is an access network apparatus, the first apparatus may send the first message. For example, the first message may be sent to a terminal apparatus, so that the access network apparatus and the terminal apparatus may use the function to perform transmission of a data packet.

In an optional implementation, the method further includes: receiving a bearer setup message from a core network apparatus, where the bearer setup message is used to set up a dedicated media bearer; and sending the first message includes: sending the first message based on the bearer setup message. When the dedicated media bearer is set up, it indicates that a service corresponding to the dedicated media bearer may be about to be transmitted. Therefore, the first apparatus (for example, an access network apparatus) may send the first message, to use the function of removing the check field in a transmission process of the service, so as to improve network performance.

In an optional implementation, the method further includes: determining that an access network apparatus performs communication through NB-IoT; or determining that the dedicated media bearer is a bearer for communication through NB-IoT. For example, after the first apparatus (for example, an access network apparatus) receives the bearer setup message, if the access network apparatus performs communication through NB-IoT, and/or the G2 dedicated media bearer is a bearer for communication through NB-IoT, the first apparatus may send the first message. For the NB-IoT, a supported bandwidth is small, and it is particularly important to reduce transmission overheads. Therefore, for the NB-IoT, the function of removing a check field during transmission that is provided in this embodiment of this application may be used, to reduce transmission overheads, improve network performance, and reduce a network congestion probability.

In an optional implementation, the method further includes: receiving a second message from UE or a core network apparatus, where the second message indicates to start transmission of a media service; and sending the first message includes: sending the first message based on the second message. If a network does not set up a dedicated media bearer for the media service (for example, a service corresponding to the first data packet), but performs transmission of the media service through a default bearer, the first apparatus (for example, an access network apparatus) may not receive a bearer setup message. In this case, if the first apparatus receives the second message, it indicates that the service corresponding to the dedicated media bearer may be about to be transmitted, and the first apparatus may send the first message.

In an optional implementation, the method further includes: determining that an access network apparatus performs communication through NB-IoT; and/or determining that the media service is a service transmitted through NB-IoT.

In an optional implementation, the header compression is ROHC compression. Alternatively, the header compression may be another compression manner, which is not limited herein.

According to a second aspect, a second communication method is provided. The method may be performed by a second apparatus, and the second apparatus is, for example, a terminal apparatus or an access network apparatus. For example, a first apparatus is a terminal apparatus, and the second apparatus is an access network apparatus; or a first apparatus is an access network apparatus, and the second apparatus is a terminal apparatus. For descriptions of the terminal apparatus or the access network apparatus, refer to the first aspect. The method includes: receiving a third data packet; performing header decompression on the third data packet; determining, based on the third data packet on which the header decompression is performed, that a value of a check field is a second value; and setting a value of the check field in the third data packet on which the header decompression is performed to the second value to obtain a fourth data packet.

In an optional implementation, before performing the header decompression on the third data packet, the method further includes: adding the check field to the third data packet, where the value of the check field is a first value.

In an optional implementation, the check field is a UDP checksum field.

In an optional implementation, determining, based on the third data packet on which the header decompression is performed, that the value of the check field is the second value includes: determining, based on an IP header, a UDP header, and UDP data of the decompressed third data packet, that the value of the check field is the second value.

In an optional implementation, the method further includes: sending or receiving capability information, where the capability information indicates that removing the check field during transmission is allowed.

In an optional implementation, the method further includes: sending or receiving a first message, where the first message indicates to activate a function of removing the UDP checksum field during transmission.

In an optional implementation, the method further includes: receiving a bearer setup message from a core network apparatus, where the bearer setup message is used to set up a dedicated media bearer; and sending the first message includes: sending the first message based on the bearer setup message.

In an optional implementation, the method further includes: determining that an access network apparatus performs communication through NB-IoT; and/or determining that the dedicated media bearer is a bearer for communication through NB-IoT.

In an optional implementation, the method further includes: receiving a second message from UE or a core network apparatus, where the second message indicates to start transmission of a media service; and sending the first message includes: sending the first message based on the second message.

In an optional implementation, the method further includes: determining that an access network apparatus performs communication through NB-IoT; and/or determining that the media service is a service transmitted through NB-IoT.

For technical effects brought by the second aspect or various optional implementations, refer to the descriptions of the technical effects of the first aspect or the corresponding implementations.

According to a third aspect, a third communication method is provided. The method may be performed by a first apparatus, and the first apparatus is, for example, a terminal apparatus or an access network apparatus. For descriptions of the terminal apparatus or the access network apparatus, refer to the first aspect. The method includes: sending N data packets, where a part of data packets in the N data packets include a header, a remaining data packet in the N data packets includes no header, and N is an integer greater than or equal to 2.

In this embodiment of this application, headers of some data packets in the N data packets may be removed, so that the N data packets from which the headers are removed are sent. In this way, transmission overheads can be reduced to a great extent, thereby helping improve network transmission performance.

In an optional implementation, the part of data packets are a 1^{st} data packet, a last data packet, or any data packet in the N data packets, or a part of data packets that are first transmitted in the N data packets. For example, both the first apparatus and the second apparatus can determine which data packet or data packets in the N data packets the part of data packets are, and the second apparatus can restore, based on retained headers in the N data packets, the removed headers in the N data packets. Therefore, which data packet or data packets in the N data packets the part of data packets are is not limited.

In an optional implementation, the N data packets are all data packets corresponding to a first service or a part of data packets corresponding to the first service. For example, if the N data packets are all data packets corresponding to the first service, for all the data packets corresponding to the first service, a header needs to be retained only in a part of data packets, so that transmission overheads can be reduced to a great extent. Alternatively, the N data packets are a part of data packets corresponding to the first service. For example, processing in this embodiment of this application may be performed on the part of data packets of the first service, and other data packets of the first service may be transmitted in a manner without removing a header, so that transmission overheads can be reduced to some extent, and transmission reliability of the first service can be ensured. Alternatively, it may be considered that a data packet of the first service is divided (actively divided or passively divided) into a plurality of parts, and the solution in this embodiment of this application may be performed on each part separately. In this case, transmission reliability of each part is high, and a probability that the parts affect each other is reduced.

In an optional implementation, the N data packets are the part of data packets corresponding to the first service, and the N data packets are data packets sent by using a resource scheduled once. For example, in a transmission process of the first service, transmission may be completed by scheduling a resource a plurality of times, and the N data packets may be data packets sent by using a resource scheduled once. The technical solution in this embodiment of this application may be performed on the data packets sent by using a resource scheduled once, so that transmission overheads can be reduced, and impact of the N data packets on other data packets of the first service can be reduced. Optionally, before sending uplink data, UE needs to apply to the access network apparatus for a resource used to send the uplink data. Therefore, the resource scheduled once may be understood as an air interface radio resource allocated by the access network apparatus to the UE when the UE requests a resource for transmission once from the access network apparatus. The air interface radio resource may be used by the UE to perform transmission of the uplink data. A basic unit or a minimum unit of radio resource scheduling may be a physical resource block (physical resource block, PRB).

In an optional implementation, the method further includes: sending or receiving capability information, where the capability information indicates that removing a header of a data packet during transmission is supported. Removing a header during transmission may be used as a function that may be activated or deactivated to flexibly apply the function. For example, if the first apparatus is a terminal apparatus, the first apparatus may receive the first message. For example, the first message is from an access network apparatus, and if the first apparatus receives the first message, the first apparatus may use the function. Otherwise, the function is considered as inactive. Alternatively, if the first apparatus is an access network apparatus, the first apparatus may send the first message. For example, the first message may be sent to a terminal apparatus, so that the access network apparatus and the terminal apparatus may use the function to perform transmission of a data packet.

In an optional implementation, the method further includes: sending or receiving a first message, where the first message indicates to activate a function of removing a header of a data packet during transmission.

In an optional implementation, the method further includes: receiving a bearer setup message from a core network apparatus, where the bearer setup message is used to set up a dedicated media bearer; and sending the first message includes: sending the first message based on the bearer setup message.

In an optional implementation, the method further includes: determining that an access network apparatus performs communication through NB-IoT; and/or determining that the dedicated media bearer is a bearer for communication through NB-IoT.

In an optional implementation, the method further includes: receiving a second message from UE or a core network apparatus, where the second message indicates to start transmission of a media service; and sending the first message includes: sending the first message based on the second message.

In an optional implementation, the method further includes: determining that an access network apparatus performs communication through NB-IoT; and/or determining that the media service is a service transmitted through NB-IoT.

For technical effects brought by some optional implementations of the third aspect, refer to the descriptions of the technical effects of the first aspect or the corresponding implementations.

According to a fourth aspect, a fourth communication method is provided. The method may be performed by a second apparatus, and the second apparatus is, for example, a terminal apparatus or an access network apparatus. For example, a first apparatus is a terminal apparatus, and the second apparatus is an access network apparatus; or a first apparatus is an access network apparatus, and the second apparatus is a terminal apparatus. For descriptions of the terminal apparatus and the access network apparatus, refer to the first aspect. The method includes: receiving N data packets, where a part of data packets in the N data packets include a header, a remaining data packet in the N data packets includes no header, and N is an integer greater than or equal to 2; and determining a header of the remaining data packet based on the header of the part of data packets.

In an optional implementation, the part of data packets are a 1^{st} data packet in the N data packets or a part of data packets that are first transmitted in the N data packets.

In an optional implementation, the N data packets are all data packets corresponding to a first service or a part of data packets corresponding to the first service.

In an optional implementation, the method further includes: sending or receiving capability information, where the capability information indicates that removing a header of a data packet during transmission is supported.

In an optional implementation, the method further includes: sending or receiving a first message, where the first message indicates to activate a function of removing a header of a data packet during transmission.

In an optional implementation, the method further includes: receiving a bearer setup message from a core network apparatus, where the bearer setup message is used to set up a dedicated media bearer; and sending the first message includes: sending the first message based on the bearer setup message.

In an optional implementation, the method further includes: determining that an access network apparatus performs communication through NB-IoT; and/or determining that the dedicated media bearer is a bearer for communication through NB-IoT.

In an optional implementation, before sending the first message, the method further includes: receiving a second message from UE or a core network apparatus, where the second message indicates to start transmission of a media service; and sending the first message includes: sending the first message based on the second message.

In an optional implementation, the method further includes: determining that an access network apparatus performs communication through NB-IoT; and/or determining that the media service is a service transmitted through NB-IoT.

In an optional implementation, the header is an ROHC header.

For technical effects brought by the fourth aspect or various optional implementations, refer to the descriptions of technical effects of the third aspect or the corresponding implementations.

According to a fifth aspect, a fifth communication method is provided. The method may be performed by a first apparatus, and the first apparatus is, for example, a terminal apparatus or an access network apparatus. For descriptions of the terminal apparatus or the access network apparatus, refer to the first aspect. The method includes: obtaining N data packets; obtaining a first data packet based on the N data packets, where the first data packet includes payloads of the N data packets and includes a first header, the first header is determined based on a header of a part of or all data packets in the N data packets, and N is an integer greater than or equal to 2; and sending the first data packet.

In this embodiment of this application, the payloads of the N data packets may be combined, so that the obtained first data packet may include only the first header and include no other header. In this way, transmission overheads can be reduced to a great extent, thereby helping improve network transmission performance.

In an optional implementation, the first header is determined based on a header of a second data packet in the N data packets, and the second data packet is a data packet that is first transmitted or last transmitted in the N data packets. Alternatively, the second data packet may be any one or more data packets in the N data packets. For example, both the first apparatus and the second apparatus can determine which data packet or data packets the second data packet is, so that the second apparatus can restore headers of the N data packets based on the first header. Therefore, which data packet or data packets in the N data packets the second data packet is may not be limited in this embodiment of this application.

In an optional implementation, the N data packets are all data packets corresponding to a first service or a part of data packets corresponding to the first service.

In an optional implementation, the N data packets are the part of data packets corresponding to the first service, and the N data packets are data packets sent by using a resource scheduled once.

In an optional implementation, a sum of lengths of the payloads of the N data packets is less than or equal to an upper length limit of a data packet. The upper length limit is, for example, an upper length limit of a data packet specified in a protocol or required by a system. Therefore, the sum of the lengths of the payloads of the N data packets may be within upper length limit, to ensure that the first data packet can be sent.

In an optional implementation, the method further includes: sending or receiving capability information, where the capability information indicates that combining payloads of data packets during transmission is supported.

In an optional implementation, the method further includes: sending or receiving a first message, where the first message indicates to activate a function of combining payloads of data packets during transmission.

In an optional implementation, the method further includes: receiving a bearer setup message from a core network apparatus, where the bearer setup message is used to set up a dedicated media bearer; and sending the first message includes: sending the first message based on the bearer setup message.

In an optional implementation, the method further includes: determining that an access network apparatus performs communication through NB-IoT; and/or determining that the dedicated media bearer is a bearer for communication through NB-IoT.

In an optional implementation, the method further includes: receiving a second message from UE or a core network apparatus, where the second message indicates to start transmission of a media service; and sending the first message includes: sending the first message based on the second message.

In an optional implementation, the method further includes: determining that an access network apparatus performs communication through NB-IoT; and/or determining that the media service is a service transmitted through NB-IoT.

In an optional implementation, the first header is an ROHC header.

For technical effects brought by some optional implementations of the fifth aspect, refer to the descriptions of the technical effects of the first aspect or the corresponding implementations, and/or refer to the descriptions of the technical effects of the third aspect or the corresponding implementations.

According to a sixth aspect, a sixth communication method is provided. The method may be performed by a second apparatus, and the second apparatus is, for example, a terminal apparatus or an access network apparatus. For example, a first apparatus is a terminal apparatus, and the second apparatus is an access network apparatus; or a first apparatus is an access network apparatus, and the second apparatus is a terminal apparatus. For descriptions of the terminal apparatus and the access network apparatus, refer to the first aspect. The method includes: receiving a first data packet, where the first data packet includes payloads of N data packets and includes a first header of the N data packets, the first header is determined based on a header of a part of or all data packets in the N data packets, and N is an integer greater than or equal to 2; determining headers of the N data packets based on the first header; and restoring the first data packet to the N data packets.

In an optional implementation, the first header is determined based on a header of a second data packet in the N data packets, and the second data packet is a data packet that is first transmitted or last transmitted in the N data packets.

In an optional implementation, the N data packets are all data packets corresponding to a first service or a part of data packets corresponding to the first service.

In an optional implementation, a sum of lengths of the payloads of the N data packets is less than or equal to an upper length limit of a data packet.

In an optional implementation, the method further includes: sending or receiving capability information, where the capability information indicates that combining payloads of data packets during transmission is supported.

In an optional implementation, the method further includes: sending or receiving a first message, where the first message indicates to activate a function of combining payloads of data packets during transmission.

In an optional implementation, the method further includes: receiving a bearer setup message from a core network apparatus, where the bearer setup message is used to set up a dedicated media bearer; and sending the first message includes: sending the first message based on the bearer setup message.

In an optional implementation, the method further includes: determining that an access network apparatus performs communication through NB-IoT; and/or determining that the dedicated media bearer is a bearer for communication through NB-IoT.

In an optional implementation, the method further includes: receiving a second message from UE or a core network apparatus, where the second message indicates to start transmission of a media service; and sending the first message includes: sending the first message based on the second message.

In an optional implementation, the method further includes: determining that an access network apparatus performs communication through NB-IoT; and/or determining that the media service is a service transmitted through NB-IoT.

In an optional implementation, the first header is an ROHC header.

For technical effects brought by some optional implementations of the sixth aspect, refer to the descriptions of the technical effects of the fifth aspect or the corresponding implementations.

According to a seventh aspect, a communication apparatus is provided. The communication apparatus may be the first apparatus according to any one of the first aspect to the sixth aspect. The communication apparatus has a function of the first apparatus. The first apparatus is, for example, a terminal apparatus, and the communication apparatus is, for example, a terminal device, another device including a function of the terminal device, or a chip system (or a chip) or another functional module. The chip system or the functional module can implement the function of the terminal device. The chip system or the functional module is, for example, disposed in the terminal device. Alternatively, the first apparatus is, for example, an access network apparatus, and the communication apparatus is, for example, an access network device, another device including a function of the access network device, or a chip system (or a chip) or another functional module. The chip system or the functional module can implement the function of the access network device. The chip system or the functional module is, for example, disposed in the access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for the functional modules.

In an optional implementation, the processing unit is configured to perform header compression on a first data packet to obtain a second data packet; the processing unit is further configured to remove a check field included in a header of the second data packet to obtain a third data packet; and the transceiver unit (or the sending unit) is configured to send the third data packet.

In an optional implementation, the transceiver unit (or the sending unit) is configured to send N data packets, where a part of data packets in the N data packets include a header, a remaining data packet in the N data packets includes no header, and N is an integer greater than or equal to 2.

In an optional implementation, the processing unit is configured to obtain N data packets; the processing unit is further configured to obtain a first data packet based on the N data packets, where the first data packet includes payloads of the N data packets and includes a first header, the first header is determined based on a header of a part of or all data packets in the N data packets, and N is an integer greater than or equal to 2; and the transceiver unit (or the sending unit) is configured to send the first data packet.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the function of the first apparatus according to any one of the first aspect to the sixth aspect.

According to an eighth aspect, a communication apparatus is provided. The communication apparatus may be the second apparatus according to any one of the first aspect to the sixth aspect. The communication apparatus has a function of the second apparatus. The second apparatus is, for example, a terminal apparatus, and the communication apparatus is, for example, a terminal device, another device including a function of the terminal device, or a chip system (or a chip) or another functional module. The chip system or the functional module can implement the function of the terminal device. The chip system or the functional module is, for example, disposed in the terminal device. Alternatively, the second apparatus is, for example, an access network apparatus, and the communication apparatus is, for example, an access network device, another device including a function of the access network device, or a chip system (or a chip) or another functional module. The chip system or the functional module can implement the function of the access network device. The chip system or the functional module is, for example, disposed in the access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions of the seventh aspect.

In an optional implementation, the transceiver unit (or the receiving unit) is configured to receive a third data packet; the processing unit is configured to perform header decompression on the third data packet; the processing unit is further configured to determine, based on the third data packet on which the header decompression is performed, that a value of a check field is a second value; and the processing unit is further configured to set a value of the check field in the third data packet on which the header decompression is performed to the second value to obtain a fourth data packet.

In an optional implementation, the transceiver unit (or the receiving unit) is configured to receive N data packets, where a part of data packets in the N data packets include a header, a remaining data packet in the N data packets includes no header, and N is an integer greater than or equal to 2; and the processing unit is configured to determine a header of the remaining data packet based on the header of the part of data packets.

In an optional implementation, the transceiver unit (or the receiving unit) is configured to receive a first data packet, where the first data packet includes payloads of N data packets and includes a first header of the N data packets, the first header is determined based on a header of a part of or all data packets in the N data packets, and N is an integer greater than or equal to 2; the processing unit is configured to determine headers of the N data packets based on the first header; and the processing unit is further configured to restore the first data packet to the N data packets.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the function of the second apparatus according to any one of the first aspect to the sixth aspect.

According to a ninth aspect, a communication apparatus is provided. The communication apparatus may be a terminal device, or may be a chip or a chip system used in the terminal device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first apparatus according to the foregoing aspects.

According to a tenth aspect, a communication apparatus is provided. The communication apparatus may be an access network device, or may be a chip or a chip system used in the access network device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second apparatus according to the foregoing aspects.

According to an eleventh aspect, a communication system is provided, including a first apparatus and a second apparatus, where the first apparatus is configured to perform the method performed by the first apparatus according to any one of the first aspect to the sixth aspect, and the second apparatus is configured to perform the method performed by the second apparatus according to any one of the first aspect to the sixth aspect. For example, the first apparatus may be implemented by using the communication apparatus according to the seventh aspect or the ninth aspect, and the second apparatus may be implemented by using the communication apparatus according to the eighth aspect or the tenth aspect.

According to a twelfth aspect, a computer-readable storage medium is provided, where the computer-readable storage medium is configured to store a computer program or instructions, and when the computer program or the instructions are run, the method performed by the first apparatus and/or the second apparatus and/or an application server in the foregoing aspects is implemented.

According to a thirteenth aspect, a computer program product including instructions is provided, where when a computer program or the instructions are run on a computer, the method according to the foregoing aspects is implemented.

According to a fourteenth aspect, a chip system is provided, including a processor and an interface. The processor is configured to invoke instructions from the interface and run the instructions, to cause the chip system to implement the method according to the foregoing aspects.

### BRIEF DESCRIPTION OF DRAWINGS

FIG. 1A is a diagram of a header before ROHC compression is performed;
FIG. 1B is a diagram of a header after ROHC compression is performed;
FIG. 2A to FIG. 2C are diagrams of several application scenarios according to embodiments of this application;
FIG. 3 is a flowchart of a communication method according to an embodiment of this application;
FIG. 4A is a diagram of a header of a first data packet according to an embodiment of this application;
FIG. 4B is a diagram of a header of a second data packet according to an embodiment of this application;
FIG. 5 is a diagram of a manner of disposing a first module according to an embodiment of this application;
FIG. 6 is an example of a processing process of a first apparatus and a second apparatus according to an embodiment of this application;
FIG. 7 is a flowchart of another communication method according to an embodiment of this application;
FIG. 8 is an example of another processing process of a first apparatus and a second apparatus;
FIG. 9 is a flowchart of another communication method according to an embodiment of this application;
FIG. 10A and FIG. 10B are diagrams of two manners of disposing a third module according to an embodiment of this application;
FIG. 11 is an example of another processing process of a first apparatus and a second apparatus;
FIG. 12 is a diagram of an apparatus according to an embodiment of this application; and
FIG. 13 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of a noun indicates "a singular noun or a plural noun", namely, "one or more". "At least one" means one or more, and "a plurality of" means two or more. "And/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one item (piece) of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. In addition, step numbers in embodiments described in this application are merely intended to distinguish between different steps, but are not intended to limit a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios. For example, the terminal device includes but is not limited to a terminal device in the following scenarios: sensing scenario, cellular communication, device-to-device (device-to-device, D2D) communication, vehicle-to-everything (vehicle-to-everything, V2X), machine-to-machine/machine type communication (machine-to-machine/machine type communication, M2M/MTC), internet of things (internet of things, IoT), virtual reality (virtual reality, VR), augmented reality (augmented reality, AR), industrial control (industrial control), self-driving (self-driving), remote medical (remote medical), smart grid (smart grid), smart furniture, smart office, smart wearable, smart transportation, a smart city (smart city), an unmanned aerial vehicle, a robot, an indoor commercial scenario (for example, mobile phone projection, file sharing, and video transmission from mobile phones to VR glasses), and the like. When applied to V2X, the terminal device may also be referred to as a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or Battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device in D2D communication, for example, an electricity meter or a water meter.

In addition, the terminal device in embodiments of this application may alternatively be a terminal device in an IoT system. An IoT is an important part of future development of information technologies. A main technical feature of the IoT is connecting a thing to a network by using a communication technology, to implement an intelligent network of human-machine interconnection and thing-thing interconnection.

If various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs). The terminal device in this application may alternatively be a vehicle-mounted module, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted module, the vehicle-mounted assembly, the vehicle-mounted component, the vehicle-mounted chip, or the vehicle-mounted unit that is built in the vehicle.

The terminal device may be sometimes referred to as user equipment (user equipment, UE), a terminal, an access station, a UE station, a remote station, a wireless communication device, a user apparatus, or the like.

In embodiments of this application, a communication apparatus configured to implement a function of the terminal device may be a terminal device, or may be an apparatus that can support the terminal device in implementing the function, for example, a chip system. The apparatus may be mounted in the terminal device. In the technical solutions provided in embodiments of this application, the technical solutions provided in embodiments of this application are described by using an example in which the apparatus configured to implement the function of the terminal device is a terminal device. In addition, for ease of description, an example in which the terminal device is UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next-generation NodeB (next-generation NodeB, gNodeB)/gNB), a transmission reception point (transmission reception point, TRP), a base station evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small station, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. For example, the core network device includes an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-CP, O-CU-UP), and the RU may also be referred to as an open RU (open RU, O-RU). For ease of description, in embodiments of this application, the CU, the CU-CP, the CU-UP, the DU, and the RU are used as an example for description. In embodiments of this application, any unit in the CU (or the CU-CP or the CU-UP), the DU, and the RU may be implemented by using a software module, a hardware module, or a combination of a software module and a hardware module.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In embodiments of this application, a communication apparatus configured to implement a function of the network device may be a network device, or may be an apparatus that can support the network device in implementing the function, for example, a chip system. The apparatus may be mounted in the network device. In the technical solutions provided in embodiments of this application, the technical solutions provided in embodiments of this application are described by using an example in which the apparatus configured to implement the function of the network device is a network device (for example, an apparatus configured to implement a function of the access network device is an access network device, and an apparatus configured to implement a function of the core network device is a core network device).

The following describes technical features in embodiments of this application.

In IP voice services such as VoLTE/VoNR, a payload in an IP data packet has a size almost the same as a header, and is even smaller than the header. In this case, the header in the data packet occupies more resources than the payload, resulting in high air interface transmission overheads.

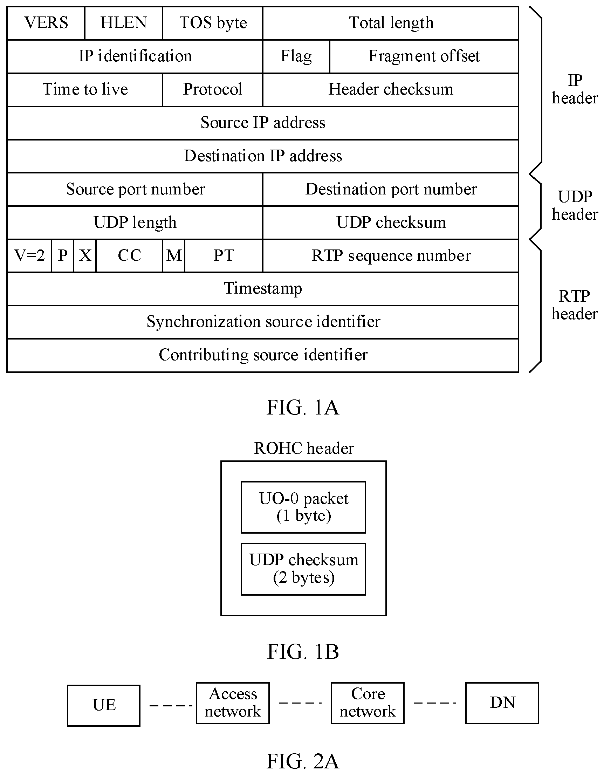

To reduce air interface transmission overheads, UE and a base station may use an ROHC technology to perform header compression on an IP data packet of a voice service on a user plane in an uplink and downlink data transmission process. ROHC compression is performed on the header, so that a 40-byte IP/UDP/RTP header may be compressed to 3 bytes (bytes) in an optimal case. Refer to FIG. 1A and FIG. 1B. FIG. 1A is a diagram of a header before ROHC compression, and FIG. 1B is a diagram of a header after ROHC compression. It can be learned from FIG. 1A that, before ROHC compression is performed, the header may include an IP header, a UDP header, and an RTP header, and the three headers occupy 40 bytes in total. The IP header includes a version (version) field, which is represented by VERS in FIG. 1A, and further includes a header length (header length, HLEN) field, a type of service (type of service, TOS) byte (byte), a total length (total length) field, an IP identification (IP identification) field, a flag (flag) field, a fragment offset (fragment offset) field, a time to live (time to live) field, a protocol (protocol) field, a header checksum (header checksum) field, a source IP address (source IP address) field, and a destination IP address (destination IP address) field. The UDP header includes a source port number (source port number) field, a destination port number (destination port number) field, a UDP length (UDP length) field, and a UDP checksum (UDP checksum) field. The RTP header includes a version number field (represented by V=2 in FIG. 1A), a padding identifier field (represented by P in FIG. 1A), an extension identifier field (represented by X in FIG. 1A), a contributing source (contributing source, CSRC) counter field (represented by CC in FIG. 1A), a mark field (represented by M in FIG. 1A), a payload type field (represented by PT in FIG. 1A), an RTP sequence number (RTP sequence number) field, a timestamp (timestamp) field, a synchronization source (synchronization source, SSRC) identifier (identifier) field, and a contributing source (contributing source, CSRC) identifier (identifier) field.

It can be learned from FIG. 1B that, after ROHC compression is performed, the IP header, the UDP header, and the RTP header are compressed to obtain an ROHC header, where the ROHC header may include an ROHC packet and a UDP checksum, and the ROHC header occupies 3 bytes in total. UO-0 in FIG. 1B represents a type of ROHC packet. It can be learned that, ROHC compression helps reduce header transmission overheads over an air interface and improve network transmission performance.

However, even if ROHC compression is performed, a 3-byte header still needs to be transmitted in an optimal case after compression. For a communication system with a small transmission bandwidth, header transmission overheads are still high.

In view of this, in embodiments of this application, a check field in a header of a second data packet may be removed, to send a second data packet from which the check field is removed (that is, a third data packet). In this case, an information amount of the header of the second data packet is reduced, so that the header transmission overheads are reduced, thereby helping improve the network transmission performance.

The technical solutions provided in embodiments of this application may be applied to a 4G system, for example, a long term evolution (long term evolution, LTE) system, may be applied to a 5G system, for example, a new radio (new radio, NR) system, or may be applied to a next-generation mobile communication system or another similar communication system, for example, a future communication system. This is not specifically limited. In addition, the technical solutions provided in embodiments of this application may also be applied to a D2D scenario, for example, an NR-D2D scenario, or may be applied to a V2X scenario, for example, an NR-V2X scenario. For example, embodiments of this application may be applied to fields such as factory manufacturing, whole-house intelligence, intelligent driving, assisted driving, intelligent connected vehicles, or an indoor commercial scenario.

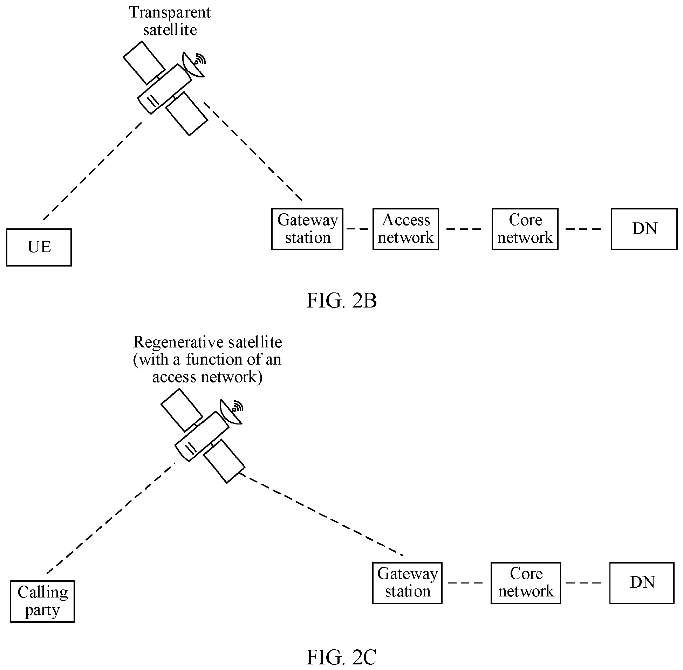

FIG. 2A to FIG. 2C are diagrams of several application scenarios according to an embodiment of this application. FIG. 2A, FIG. 2B, and FIG. 2C each include UE, a network device, and a data network (data network, DN), where the network device may include an access network device and a core network device. For example, an application server in the DN may provide a corresponding service for the UE, and a service is transmitted between the UE and the application server through the access network device and the core network device.

FIG. 2A shows a terrestrial communication scenario or a terrestrial network, and FIG. 2B and FIG. 2C show a satellite communication scenario or a non-terrestrial network (non-terrestrial network, NTN). The scenarios are all communication scenarios to which embodiments of this application are applicable. The NTN may include a transparent mode and a regenerative mode. FIG. 2B shows the transparent mode, and FIG. 2C shows the regenerative mode. In the transparent mode, a satellite does not have a function of the access network device, and the access network device is deployed on the ground. In the regenerative mode, the satellite has the function of the access network device, or the access network device is deployed on the satellite.

The following describes methods provided in embodiments of this application with reference to the accompanying drawings. The service (for example, a first service described below) in embodiments of this application may include a media service, and the media service includes, for example, one or more of a voice service, a video service, or an image service. Alternatively, the service in embodiments of this application may further include another type of service. This is not limited herein.

Embodiments of this specification may be applied to a network architecture shown in any one of FIG. 2A to FIG. 2C. For example, a first apparatus described in embodiments of this specification may be the UE in any one of FIG. 2A to FIG. 2C, and a second apparatus described in embodiments of this specification may be the access network device in any one of FIG. 2A to FIG. 2C. Alternatively, a first apparatus described in embodiments of this specification may be the access network device in any one of FIG. 2A to FIG. 2C, and a second apparatus described in embodiments of this specification may be the UE in any one of FIG. 2A to FIG. 2C. The first apparatus is a transmit end of a data packet, and the second apparatus is a receive end of the data packet. A core network device described in embodiments of this specification may be the core network device in any one of FIG. 2A to FIG. 2C.

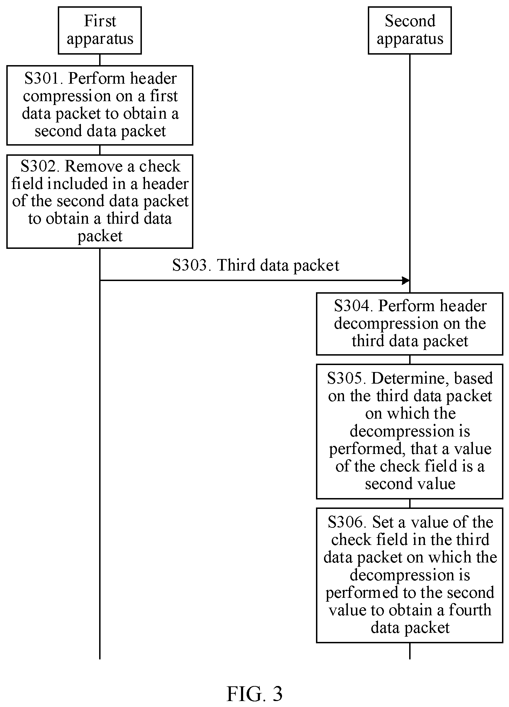

An embodiment of this application provides a communication method. FIG. 3 is a flowchart of the method.

S301. A first apparatus performs header compression on a first data packet to obtain a second data packet. The first data packet is, for example, a data packet of a first service. For example, the first data packet on which the header compression is performed is referred to as the second data packet.

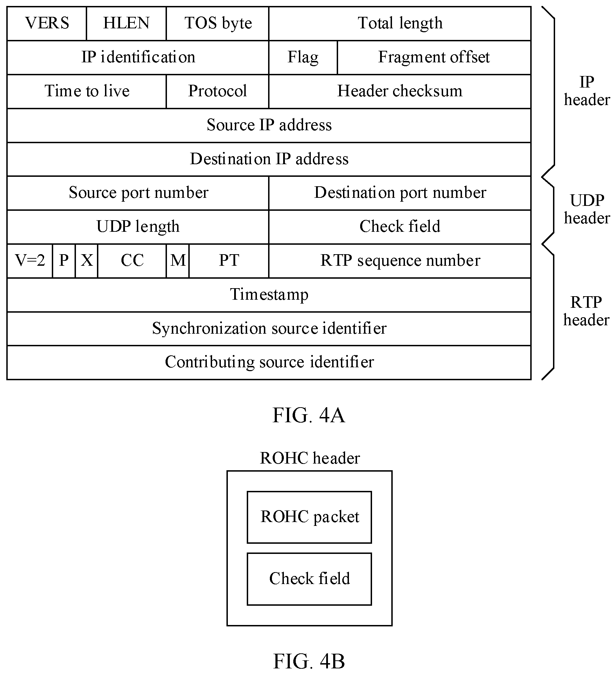

Performing the header compression on the first data packet may be understood as compressing a header of the first data packet. Optionally, the compression manner is, for example, ROHC compression, or may be another compression manner. This is not limited in this embodiment of this application. Optionally, S301 is performed, for example, by a packet data convergence protocol (packet data convergence protocol, PDCP) layer of the first apparatus. For example, if the compression manner is ROHC compression, S301 may be performed by an ROHC module at the PDCP layer. For example, the header compression is ROHC compression. For the header of the first data packet, refer to FIG. 4A, and for a header of the second data packet, refer to FIG. 4B.

The header of the first data packet includes, for example, one or more of an IP header, a UDP header, or an RTP header. The UDP header may include a check field, and the check field may be used to check transmission correctness of the first data packet, or used to check transmission correctness of a payload in the first data packet. The check field is, for example, a UDP checksum (UDP checksum) field, or may be another field used for check. For another field in the header of the first data packet, refer to the foregoing descriptions of FIG. 1A. Optionally, before performing the header compression on the first data packet, the first apparatus may first modify a value of the check field in the UDP header of the first data packet to a first value. The first value may be predefined in a protocol, configured by a core network device and/or an access network device, preconfigured in the first apparatus and a second apparatus, or determined by the first apparatus and a second apparatus through negotiation. The first value is, for example, a dummy (dummy) value. In S301, the value of the check field that is included in the UDP header included in the header of the first data packet compressed by the first apparatus is the first value.

S302. The first apparatus removes the check field included in the header of the second data packet to obtain a third data packet. For example, the second data packet from which the check field is removed is referred to as the third data packet.

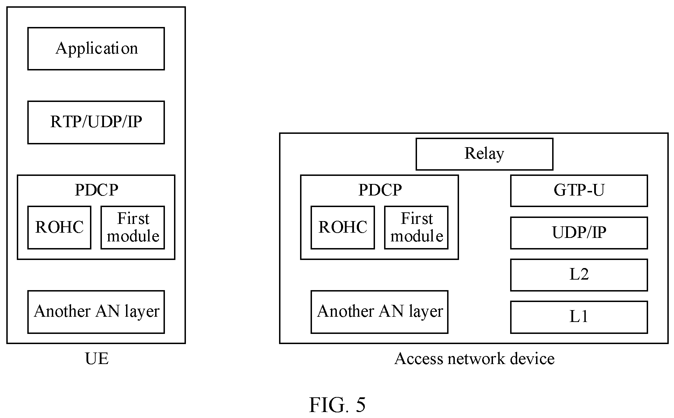

Optionally, S301 may be performed by a first module in the first apparatus, and the first module may be a hardware module or a software module. The first module may be located in an application processor (application processor, AP) or a modem (modem) of the first apparatus. For example, the first module may be an independent functional module in the AP, and the first module is, for example, located below an RTP/UDP/IP layer; or the first module may be located at an existing protocol layer in the AP, for example, the first module is located at an RTP/UDP/IP layer. For another example, the first module may be an independent functional module in the modem, for example, the first module is located above the PDCP layer; or the first module may be located at an existing protocol layer in the modem, for example, the first module is located at the PDCP layer, as shown in FIG. 5. In FIG. 5, an example in which the first apparatus is UE and the second apparatus is an access network device is used. In addition to the RTP/UDP/IP layer and the PDCP layer, the UE may further include an application (application, APP) layer, and may further include another access layer (another AN layer). In addition to the PDCP layer, the UDP/IP layer, and the another access layer, the access network device may further include a layer (layer, L) 1 and an L2, and may further include a general packet radio service (general packet radio service, GPRS) tunneling protocol-user plane (GPRS tunneling protocol-user plane, GTP-U), and the like. This is not limited herein. In addition, because the access network device performs transmission of a data packet between the UE and the application server, it may be considered that the access network device serves as a relay (relay).

The header of the second data packet is a compressed header. For example, the header includes the check field. For example, the compression manner is ROHC compression. For the header of the second data packet, refer to FIG. 4B. In FIG. 4B, the header of the second data packet is, for example, referred to as an ROHC header, and the ROHC header includes an ROHC packet and a check field. Optionally, the ROHC packet occupies one byte, and the check field occupies two bytes. It can be learned that, after the header is compressed, the header further includes the check field. In this embodiment of this application, the first apparatus may remove the check field, so that a header of the third data packet does not include the check field. For example, the check field occupies two bytes. The check field is removed, so that an information amount of the third data packet can be reduced to a great extent, thereby reducing transmission overheads of the third data packet.

S303. The first apparatus sends the third data packet. Correspondingly, the second apparatus receives the third data packet.

S304. The second apparatus performs header decompression on the third data packet. Optionally, S301 is performed, for example, by a PDCP layer of the second apparatus.

Performing the header decompression on the third data packet may be understood as decompressing the header of the third data packet. Optionally, the compression manner is, for example, ROHC compression, or may be another compression manner. This is not limited in this embodiment of this application. Optionally, S304 is performed, for example, by the PDCP layer of the second apparatus. For example, if the compression manner is ROHC compression, S304 may be performed by an ROHC module at the PDCP layer.

Optionally, before performing the header decompression on the third data packet, the second apparatus may first add the check field to the header of the third data packet. For example, a value of the check field is the first value. Because the first apparatus removes the check field in the header, the check field may be added first to perform decompression based on a complete header. However, in this case, the second apparatus cannot determine a real value of the check field. Therefore, the second apparatus may set the value of the check field to the first value. If the first apparatus compresses the first data packet after setting the value of the check field in the header of the first data packet to the first value, the second apparatus adds the check field whose value is the first value to the header of the third data packet, so that processing at the receive end and the transmit end is consistent, thereby improving decompression correctness. Alternatively, when compressing the first data packet, the first apparatus may not set the value of the check field in the header of the first data packet to the first value, but perform compression based on the real value of the check field. In this case, to restore the complete header, the second apparatus may also add the check field whose value is the first value to the header of the third data packet.

After the check field is added, the second apparatus may decompress the header of the third data packet to which the check field is added.

S305. The second apparatus determines, based on the third data packet on which the header decompression is performed, that a value of the check field is a second value. The second value may be understood as a real value of the check field that is determined by the second apparatus. Optionally, the second value may be the same as the real value of the check field that is determined by the first apparatus.

For example, the first apparatus is UE, and the second apparatus is an access network device. Although the second apparatus receives the third data packet, the second apparatus may not be a target receiving device of data in the third data packet. For example, the data is finally to be sent to an application server that provides the first service. That is, the second apparatus needs to continue to send the data. The check field may be used by the application server to check the received data, to determine whether the received data is correct. Therefore, the second apparatus may determine the real value of the check field, so that when continuing to send the data, the second apparatus can set the real value of the check field in the header of the data packet for the application server to perform check.

Optionally, the second apparatus may determine, based on information such as an IP header, a UDP header, and UDP data of the decompressed third data packet, that the value of the check field is the second value. For example, the second apparatus may determine the second value based on a pseudo header, the UDP header, and a first part (for example, understood as a bit stream of the three parts connected in series). The first part may be a result of performing ones' complement summation on the UDP data based on 16 bits (bits). For example, the process includes: splitting the UDP data into a plurality of parts at a granularity of 16 bits, where for example, each part includes 16 bits, and negating values of bits included in each part (for example, if an original value of a bit is 1, changing the value to 0; or if an original value of a bit is 0, changing the value to 1). After the values of the bits included in the plurality of parts are all negated, the values of the bits in the parts are correspondingly added (for example, 16 bits included in any two parts in the plurality of parts may be in one-to-one correspondence based on a sequence, and values of two corresponding bits are added) to obtain a 16-bit bit stream, and the bit stream may be used as the first part.

In addition, the pseudo header may include one or more of the following: an IP source address in the IP header, an IP destination address in the IP header, or a protocol number in the IP header in the header of the decompressed third data packet, or a UDP length (length) in the UDP header in the header of the decompressed third data packet.

The UDP data may include information other than the UDP header in the header of the third data packet. For example, an IPD layer, an RTP layer, and a UDP layer are protocol layers from top to bottom. A data packet is transmitted from the IP layer to the UDP layer, and a header corresponding to each layer is added to the data packet when the data packet is processed at the layer. The UDP layer receives the data packet from the RTP layer, and the UDP layer may add a UDP header to the data packet. In this case, all information other than the UDP header in the data packet after the UDP header is added may be considered as UDP data.

S306. Set a value of the check field in the third data packet on which the header decompression is performed to the second value to obtain a fourth data packet. Optionally, still refer to FIG. 5, and S305 and/or S306 may be performed by a first module in the second apparatus. In other words, in this embodiment of this application, a first module may also be disposed in the second apparatus, and the first module in the second apparatus may implement a function corresponding to the first module in the first apparatus. For an implementation of the first module in the second apparatus, refer to the descriptions of the first module in the first apparatus. The first module in the first apparatus and the first module in the second apparatus may be located at a same location, for example, both located at the PDCP layer (as shown in FIG. 5); or the first module in the first apparatus and the first module in the second apparatus may be located at different locations, for example, the first module in the first apparatus is located in the AP, and the first module in the second apparatus is located at the PDCP layer.

Optionally, before performing the header decompression on the third data packet, the second apparatus may first add the check field to the header of the third data packet. For example, the value of the check field is the first value. In S306, the second apparatus may set the value of the check field to the second value, which is equivalent to restoring the check field. If the restoration is correct, the fourth data packet restored by the second apparatus may be the same as the first data packet processed by the first apparatus.

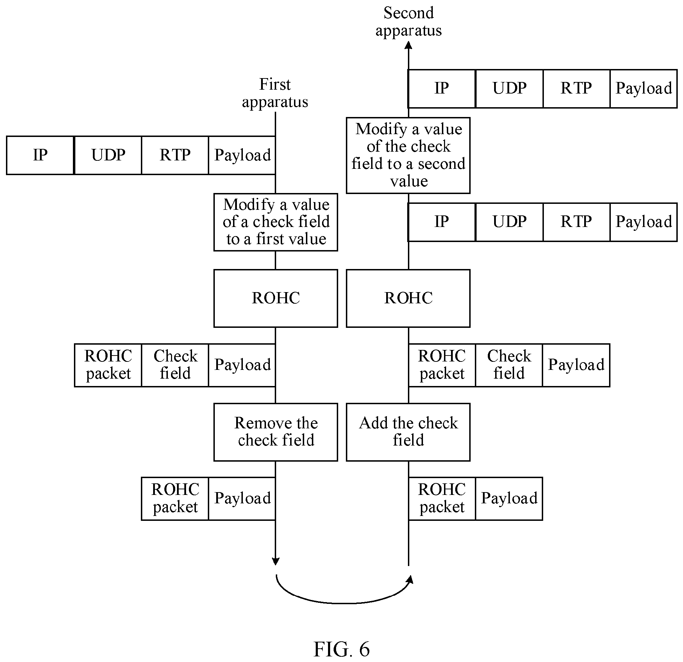

For example, FIG. 6 is an example of a processing process of the first apparatus and the second apparatus. For example, the first apparatus obtains a first data packet, where a header of the first data packet may include an IP header, a UDP header, and an RTP header, and the first data packet further includes a payload (payload). The first apparatus sets a value of a check field in the UDP header to a first value, and then the ROHC module in the first apparatus performs header compression on the first data packet to obtain a second data packet, where the second data packet may include an ROHC header (the ROHC header includes, for example, the check field and an ROHC packet) and the payload. The first module in the first apparatus removes the check field in the second data packet to obtain a third data packet, where the third data packet may include the ROHC header and the payload, and the ROHC header no longer includes the check field. The first apparatus sends the third data packet, and the second apparatus receives the third data packet. The second apparatus may add the check field to a header of the third data packet, where a value of the check field is set to the first value. The third data packet to which the check field is added may include the ROHC header (the ROHC header includes, for example, the check field and the ROHC packet) and the payload. The ROHC module in the second apparatus performs header decompression on the third data packet to which the check field is added, where the third data packet on which the header decompression is performed may include the IP header, the UDP header, the RTP header, and the payload, where a value of the check field in the UDP header is the first value. The first module in the second apparatus may determine that a real value of the check field is a second value, and modify the value of the check field to the second value, to obtain a fourth data packet.

Optionally, if the second apparatus is not a target receiving device of the fourth data packet, for example, the first apparatus is UE, the second apparatus is an access network device, and the target receiving device of the fourth data packet is the application server that provides the first service, the second apparatus may send the fourth data packet after S306. For example, the second apparatus may send the fourth data packet to the core network device, to send the fourth data packet to the application server through the core network device.

Alternatively, if the second apparatus is a target receiving device of the fourth data packet, for example, the first apparatus is an access network device, and the second apparatus is UE, the second apparatus does not need to send the fourth data packet, and the transmission process ends.

A function of removing a check field that is provided in this embodiment of this application is, for example, a capability of the first apparatus and/or the second apparatus, which may be supported by some apparatuses, and may not be supported by some other apparatuses. Therefore, optionally, the first apparatus or the second apparatus may report capability information. The capability information may indicate whether the first apparatus or the second apparatus supports removal of a check field during transmission. For example, the check field is a UDP checksum. The capability information is, for example, referred to as UDP checksum reduction (reduction), and referred to as UChsRed for short, or the capability information may have another name. For example, if the first apparatus is UE and the second apparatus is an access network device, the first apparatus may send capability information of the first apparatus to the second apparatus, where the capability information may indicate whether the first apparatus supports removal of a check field during transmission; or if the second apparatus is UE and the first apparatus is an access network device, the second apparatus may send capability information of the second apparatus to the first apparatus, where the capability information may indicate whether the second apparatus supports removal of a check field during transmission. Optionally, a receive end (the first apparatus or the second apparatus) of the capability information may first send capability query information to a transmit end (the second apparatus or the first apparatus) of the capability information, to query a capability of the transmit end. After receiving the capability query information, the transmit end may send the capability information to the receive end. Optionally, the receive end may further send the capability information to the core network device, so that the core network device can also determine a capability of a corresponding apparatus. The core network device is, for example, an AMF, or may be another device in a core network.

Alternatively, the first apparatus or the second apparatus may not need to report the capability information. For example, the first apparatus or the second apparatus supports removal of a check field during transmission by default.

Optionally, the function of removing a check field during transmission that is provided in this embodiment of this application may be activated or deactivated for flexible application. For example, an access network device in the first apparatus and an access network device in the second apparatus may indicate UE in the two apparatuses to activate or deactivate the function. For example, the first service is a call service. The network may set up a dedicated bearer, for example, a dedicated media bearer for the call service, which is usually a guaranteed bit rate (guaranteed bit rate, GBR) bearer, or the network may not set up a dedicated bearer for the call service, but perform transmission of the call service through a default bearer (default bearer) set up when an IP multimedia subsystem (IP multimedia subsystem, IMS) protocol data unit (protocol data unit, PDU) session (session) is established or a QoS flow associated with a default QoS rule (QoS Flow associated with a default QoS rule). Optionally, the default bearer is usually a non(non)-GBR bearer. If the network needs to set up a dedicated media bearer for the call service, the access network device may activate the function if determining one or more of the following cases; otherwise, the access network device may not need to activate or deactivate the function: The access network device performs communication through narrowband (narrowband, NB)-IoT, the first service is a service transmitted through NB-IoT, or the dedicated media bearer is a bearer for communication through NB-IoT (for example, a quality of service (quality of service, QoS) class requirement of the dedicated media bearer is voice or video, for example, a QoS class identifier (QoS class identifier, QCI) or a 5G QoS identifier (5G QoS Identifier, 5QI) corresponding to the QoS is 1 or 2). For the NB-IoT, a supported bandwidth is small, and it is particularly important to reduce transmission overheads. Therefore, for the NB-IoT, the function of removing a check field during transmission that is provided in this embodiment of this application may be used, to reduce transmission overheads, improve network performance, and reduce a network congestion probability. For example, the core network device sends a bearer setup message to the access network device, where the bearer setup message may be used to set up the dedicated media bearer, and the dedicated media bearer is used to perform transmission of the first service. The access network device may send a first message to the UE, and the first message may indicate to activate the function of removing a check field during transmission. Optionally, the access network device may send the first message to the UE when determining one or more of the foregoing cases. The bearer setup message is, for example, an S1 interface message in an LTE system, or an N2 message in a 5G system. Optionally, the first message is, for example, a radio resource control (radio resource control, RRC) message like an RRC reconfiguration (RRC reconfiguration) message, or may be another RRC message or a message at another protocol layer.

If the network does not set up a dedicated media bearer for the call service, but performs transmission of the call service through a default bearer, the access network device may activate the function if determining that the access network device performs communication through the NB-IoT and/or determining that the first service is a service transmitted through the NB-IoT. Otherwise, the access network device may not need to activate or deactivate the function. For example, if the access network device receives a second message from the UE or the core network device, the access network device may send the first message to the UE. Optionally, the access network device may send the first message to the UE when determining that the access network device performs communication through the NB-IoT and/or determining that the first service is a service transmitted through the NB-IoT. The second message may indicate to start transmission of a media service. For descriptions of the first message, refer to the foregoing descriptions.

For example, if the UE receives a session initiation protocol (session initiation protocol, SIP) message from an IMS, for example, if calling UE receives a message like SIP 180, SIP 183, or SIP 200 OK from called UE, the calling UE may determine that a call is connected, and the UE may send the second message to the access network device. The second message may trigger the access network device to sense and start transmission of the first service (for example, the first service is a call service, and starting transmission of the first service may also be understood as starting transmission of call data). After receiving the second message, the access network device may send the first message to the UE. For example, the second message includes indication information, and may indicate the UE to start transmission of the first service or start transmission of a data packet of the first service. Optionally, the second message may further include description information of the data packet of the first service, for example, include an IP 3-tuple or an IP 5-tuple corresponding to the data packet of the first service. Optionally, the second message is, for example, an RRC message, or may be information about another protocol layer. The UE may be calling UE, and the access network device may be an access network device serving the calling UE; or the UE may be called UE, and the access network device may be an access network device serving the called UE.

For another example, after a call between the calling UE and the called UE is connected, an IMS serving the called UE may send a SIP message to the called UE, and after receiving the SIP message (for example, a SIP provisional response acknowledgment (provisional response ACKnowledgement, PRACK) or a SIP update (UPDATE) message), the called UE may send the second message to the access network device serving the called UE. Alternatively, after a call between the calling UE and the called UE is connected, after sending a SIP message (for example, a message like SIP 180, SIP 183, or SIP 200 OK), the called UE may send the second message to the access network device serving the called UE. The second message may trigger the access network device to sense and start transmission of the first service. After receiving the second message, the access network device may send the first message to the called UE.

In addition, after receiving the SIP message, the called UE may further send the SIP message to the IMS, and after receiving the SIP message, the IMS may send the SIP message to an IMS serving the calling UE. After receiving the SIP message, the IMS serving the calling UE may send the SIP message to the calling UE. After receiving the SIP message, the calling UE may send the second message to the access network device serving the calling UE. The second message may trigger the access network device to sense and start transmission of the first service. After receiving the second message, the access network device may send the first message to the calling UE. For the first message, the second message, or the like, refer to the foregoing descriptions. It can be learned that the solution in this embodiment of this application is applicable to a calling party and/or a called party. For example, both the calling party and the called party may perform the solution in this embodiment of this application.

In conclusion, in this embodiment of this application, the check field in the header of the second data packet may be removed, to send a second data packet from which the check field is removed (that is, the third data packet). In this case, an information amount of the header of the second data packet is reduced, so that header transmission overheads are reduced, thereby helping improve network transmission performance. If the second apparatus is not a target receiving device of the first data packet, the second apparatus may further restore the check field, so that the target receiving device (for example, the application server) of the first data packet can check correctness of the received data packet based on the check field. It can be learned that in this embodiment of this application, transmission correctness can be ensured to some extent, and transmission overheads can be reduced.

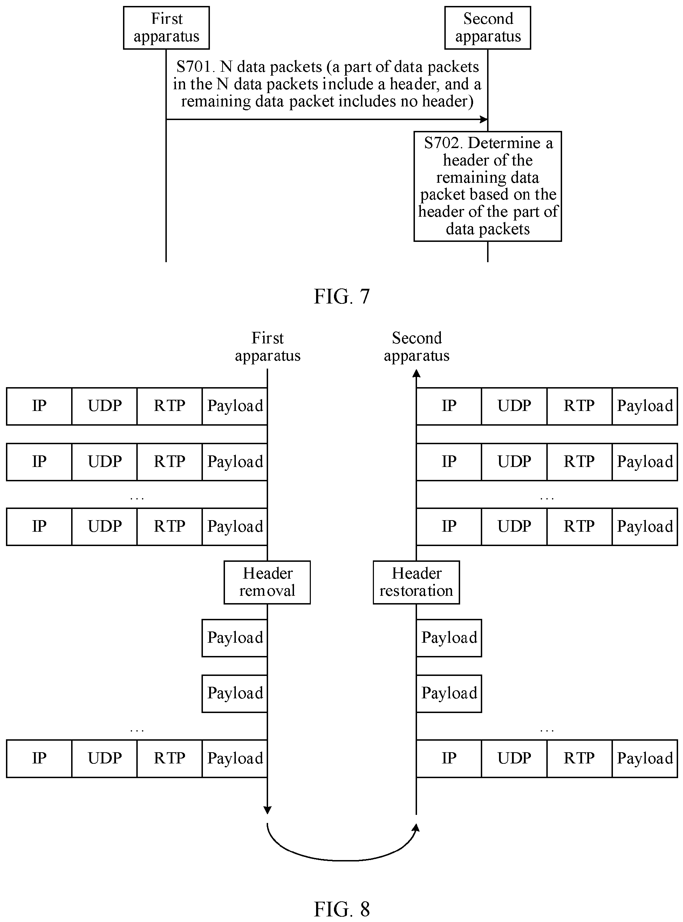

An embodiment of this application provides another communication method. FIG. 7 is a flowchart of the method.

S701. A first apparatus sends N data packets. Correspondingly, a second apparatus receives the N data packets. N is an integer greater than or equal to 2.

The N data packets may be data packets of a first service. In the N data packets, a part of data packets may include a header, and a remaining data packet other than the part of data packets in the N data packets may include no header. For example, one header may include an IP header, a UDP header, and an RTP header. This means that, in this embodiment of this application, the header of the part of data packets corresponding to the first service may be removed, thereby reducing transmission overheads.

Optionally, the part of data packets may be a 1^{st} data packet (for example, the N data packets have respective corresponding numbers, and the part of data packets may be a data packet that is first numbered in sequence, for example, a data packet with a smallest number or a data packet that ranks top) or a last data packet (for example, the part of data packets may be a data packet that is last numbered in sequence, for example, a data packet with a largest number or a data packet that ranks bottom) in the N data packets. In this case, a quantity of the part of data packets is 1. Alternatively, the part of data packets may be any data packet in the N data packets; or the part of data packets may be a part of data packets that are first transmitted or last transmitted in the N data packets, or may be any part of data packets in the N data packets. In this case, a quantity of the part of data packets may be greater than or equal to 1.

Optionally, the N data packets may be all data packets corresponding to the first service, or may be a part of data packets corresponding to the first service. For example, if the N data packets are all data packets corresponding to the first service, and the part of data packets is the 1^{st} data packet in the N data packets, it indicates that for the first service, only the 1^{st} data packet has a header, and other data packets have no header. This solution can reduce transmission overheads to a greater extent.

For another example, if the N data packets are a part of data packets corresponding to the first service, a quantity of N may be predefined in a protocol, preconfigured in the first apparatus and the second apparatus, or determined by the first apparatus and the second apparatus through negotiation. Alternatively, a quantity of N may be dynamically determined. For example, the N data packets may be data packets sent by using a resource scheduled once. In different times of resource scheduling, corresponding values of N may be the same or different. It may be understood that, in a process of performing transmission of the first service, the first apparatus may need to schedule a resource a plurality of times to send the data packets of the first data packet. A resource scheduled once may be used to send one or more data packets of the first service. In this case, the N data packets may be all or a part of data packets sent by using the resource scheduled once. This means that, in a scheduling process, a part of data packets may carry a header, and a remaining data packet may carry no header, so that transmission overheads can be reduced. In addition, a small quantity of data packets are scheduled once. Even if a data packet carries no header, the header that is not carried may be restored based on an existing header, thereby helping reduce an error rate.

Optionally, in this embodiment of this application, a second module may be added to the first apparatus. The second module may be configured to determine headers of the N data packets, for example, determine a data packet, in the N data packets, in which a header is retained and a data packet, in the N data packets, from which a header is removed. The second module may be a hardware module or a software module. The second module may be located in an AP or a modem of the first apparatus. For example, the second module may be an independent functional module in the AP, and the second module is, for example, located below an RTP/UDP/IP layer; or the second module may be located at an existing protocol layer in the AP, for example, the second module is located at an RTP/UDP/IP layer. For another example, the second module may be an independent functional module in the modem, for example, the second module is located above a PDCP layer; or the second module may be located at an existing protocol layer in the modem, for example, the second module is located at a PDCP layer.

For example, if the second module is located in the AP of the first apparatus, the AP may add a header to each data packet in the part of data packets in the N data packets, and does not add a header to the remaining data packet, and the AP transfers the processed N data packets to the modem of the first apparatus. Optionally, this manner is applicable to a case in which N is statically configured. For example, N is predefined in a protocol, preconfigured in the first apparatus and the second apparatus, or determined by the first apparatus and the second apparatus through negotiation. Alternatively, the AP may add a header to each data packet in the obtained data packets, and the AP may temporarily not transfer the data packets to the modem. If the AP receives an indication from the modem, indicating that a data packet is transmitted or indicating that there is a resource used to perform transmission of a data packet, the AP may retain a header of a part of data packets in data packets that are not sent in the AP, remove a header of a remaining data packet, and then transfer the processed data packets to the modem. The data packets are used as the N data packets. Optionally, this manner is applicable to a case in which N is dynamically determined. No matter which manner is used by the AP, for the modem, the data packets from the AP are directly sent, and processing such as addition or removal does not need to be performed on a header.

Alternatively, if the second module is located in the modem of the first apparatus, the AP of the first apparatus may add a header to each obtained data packet in a conventional manner, and send the processed data packets to the modem. After receiving the data packets from the AP, the modem may retain a header of a part of data packets, remove a header of a remaining data packet, and then send the processed data packets. When N is determined dynamically and a quantity of data packets from the AP may be less than, greater than, or equal to N, if the quantity of data packets from the AP is less than N, the modem may wait until the quantity of data packets from the AP reaches N, retain a header of a part of data packets, remove a header of a remaining data packet, and then send the processed data packets. Alternatively, if the quantity of data packets from the AP is equal to N, the modem may retain a header of a part of data packets, remove a header of a remaining data packet, and then send the processed data packets. Alternatively, if the quantity of data packets from the AP is greater than N, the modem may select N data packets (for example, select N data packets that are received first), retain a header of a part of data packets, remove a header of a remaining data packet in the N data packets, and then send processed data packets. For a data packet that is not selected, the modem may process the data packet next time.

Optionally, no matter whether the second module is located in the AP or the modem, the modem may separately perform compression on each retained header in the N data packets, and then send the N data packets with the compressed headers, to reduce transmission overheads. The compression manner is, for example, ROHC, or may be another manner. To further reduce the transmission overheads, optionally, this embodiment of this application may also be combined with the embodiment shown in FIG. 3. For example, for each data packet in a part of data packets in the N data packets, the first apparatus may compress a header of the data packet, and may remove a check field included in the compressed header, and the first apparatus may send the N data packets from which the check field is removed. For descriptions of specific content of this part, refer to the embodiment shown in FIG. 3.

S702. The second apparatus determines the header of the remaining data packet based on the header of the part of data packets in the N data packets. Optionally, S702 may be performed by a second module in the second apparatus. In other words, in this embodiment of this application, a second module may also be disposed in the second apparatus, and the second module in the second apparatus may implement a function corresponding to the second module in the first apparatus. For an implementation of the second module in the second apparatus, refer to the descriptions of the second module in the first apparatus. The second module in the first apparatus and the second module in the second apparatus may be located at a same location, for example, both located at the PDCP layer; or the second module in the first apparatus and the second module in the second apparatus may be located at different locations, for example, the second module in the first apparatus is located in the AP, and the second module in the second apparatus is located at the PDCP layer.

The second apparatus receives the N data packets, but only a part of data packets have a header, and a remaining data packet has no header. In this case, the second apparatus may restore the header of the remaining data packet based on the header of the part of data packets, so that the N data packets have respective headers. For example, if a target receiving device of the N data packets is not the second apparatus, the second apparatus needs to continue to send the N data packets (for example, the first apparatus is UE, the second apparatus is an access network device, and the target receiving apparatus is an application server that provides the first service), the second apparatus may restore the header of the remaining data packet, so that the target receiving apparatus can obtain N complete data packets.

For example, if the part of data packets are the 1^{st} data packet in the N data packets, the second apparatus may separately number remaining data packets based on a receiving sequence of the remaining data packets starting from a number of the 1^{st} data packet plus 1. For example, if the number of the 1^{st} data packet is n, the N data packets are respectively numbered n+1, n+2, and so on based on the receiving sequence. Therefore, the second apparatus may restore the header of the remaining data packet.

For another example, if the part of data packets are the last data packet in the N data packets, the second apparatus may separately number remaining data packets in a reverse direction based on a receiving sequence of the remaining data packets starting from a number of the last data packet minus 1. For example, if the number of the last data packet is n, the N data packets are respectively numbered n-1, n-2, and so on in a reverse direction based on the receiving sequence, where the data packet numbered n-1 is received after the data packet numbered n-2. Therefore, the second apparatus may restore the header of the remaining data packet.

For another example, if the part of data packets are any data packet in the N data packets, the second apparatus may predict a location of the any data packet in the N data packets. For example, the location may be negotiated by the first apparatus and the second apparatus, predefined in a protocol, or preconfigured in the first apparatus and the second apparatus. In this case, the second apparatus may separately number the remaining data packets based on the location of the any data packet and a receiving sequence of the remaining data packets. For example, if the any data packet is a 3^{rd} data packet in the N data packets, the second apparatus may separately number first two data packets in the N data packets in a reverse direction starting from a number of the any data packet minus 1 and separately number data packets after the 3^{rd} data packet in the N data packets in a forward direction. Therefore, the second apparatus may restore the header of the remaining data packet.

This embodiment of this application is combined with the embodiment shown in FIG. 3. For example, for each data packet in a part of data packets in the N data packets, the first apparatus compresses a header of the data packet, and removes a check field included in the compressed header. The first apparatus sends the N data packets from which the check field is removed, and the second apparatus receives the N data packets from which the check field is removed. Optionally, the second apparatus may restore the check field in each retained header in the N data packets. For a restoration manner, refer to the embodiment shown in FIG. 3. For example, the second apparatus may determine the header of the remaining data packet based on the retained headers after restoring the check field, or the second apparatus may first determine the header of the remaining data packet based on the retained headers, and then restore the check field in each retained header.

For example, FIG. 8 is an example of a processing process of the first apparatus and the second apparatus. In FIG. 8, in N data packets sent by the first apparatus, a part of data packets carry a header (including an IP header, a UDP header, and an RTP header), and a remaining data packet carries no header. For example, the remaining data packet includes a payload but includes no header. After the N data packets arrive at the second apparatus, the second apparatus may restore a header of the remaining data packet based on the header of the part of data packets, so that the second apparatus may obtain N complete data packets.

Optionally, if the second apparatus is not a target receiving device of the N data packets, for example, the first apparatus is UE, the second apparatus is an access network device, and the target receiving device of the fourth data packet is the application server that provides the first service, the second apparatus may send the N data packets after S702. For example, the second apparatus may send the N data packets to a core network device, to send the N data packets to the application server through the core network device. Each data packet in the N data packets sent by the second apparatus may have a header.

Alternatively, if the second apparatus is a target receiving device of the N data packets, for example, the first apparatus is an access network device, and the second apparatus is UE, the second apparatus does not need to send the N data packets, and the transmission process ends.

A function of removing a header of a data packet during transmission that is provided in this embodiment of this application is, for example, a capability of the first apparatus and/or the second apparatus, which may be supported by some apparatuses, and may not be supported by some other apparatuses. Therefore, optionally, the first apparatus or the second apparatus may report capability information. The capability information may indicate whether the first apparatus or the second apparatus supports removal of a header of a data packet during transmission. The capability information is, for example, referred to as IP/UDP/RTP header reduction, and referred to as IUPHRed for short, or the capability information may have another name. For a manner of reporting the capability information, refer to the embodiment shown in FIG. 3. Alternatively, the first apparatus or the second apparatus may not need to report the capability information. For example, the first apparatus or the second apparatus supports removal of a header of a data packet during transmission by default.

Optionally, the function of removing a header of a data packet during transmission that is provided in this embodiment of this application may be activated or deactivated for flexible application. For example, an access network device in the first apparatus and an access network device in the second apparatus may indicate UE in the two apparatuses to activate or deactivate the function. For content such as an activation manner, refer to related descriptions of the function of removing a check field during transmission in the embodiment shown in FIG. 3.

In conclusion, in this embodiment of this application, headers of some data packets in the N data packets may be removed, so that the N data packets from which the headers are removed are sent. In this way, transmission overheads can be reduced to a great extent, thereby helping improve network transmission performance. If the second apparatus is not the target receiving device of the N data packets, the second apparatus may further restore headers of the N data packets, so that the target receiving device (for example, the application server) of the N data packets can receive the N complete data packets. It can be learned that in this embodiment of this application, transmission correctness can be ensured to some extent, and transmission overheads can be reduced.

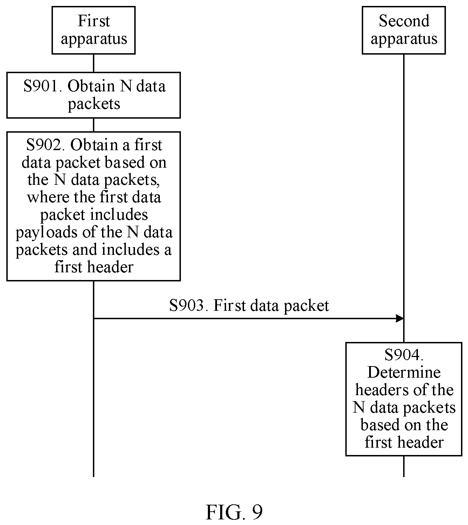

An embodiment of this application provides still another communication method. FIG. 9 is a flowchart of the method.

S901. A first apparatus obtains N data packets, where N is an integer greater than or equal to 2.

The N data packets may be data packets of a first service. Optionally, the N data packets may be all data packets corresponding to the first service, or may be a part of data packets corresponding to the first service. For descriptions of this, refer to the embodiment shown in FIG. 7.

S902. The first apparatus obtains a first data packet based on the N data packets.

The first data packet may include payloads of the N data packets and include a first header, and a quantity of first headers is, for example, 1. That is, the first data packet may include one header, but may include the payloads of the N data packets. For example, it is understood that the first apparatus may place the payloads of the N data packets into one data packet, or it is understood that the first apparatus combines the payloads of the N data packets (or combines the N data packets), thereby reducing a quantity of headers corresponding to the N data packets (for example, reducing N headers to one header), and reducing transmission overheads.

Optionally, a sum of lengths of the payloads of the N data packets may be less than or equal to an upper length limit of the data packet. The upper length limit is, for example, an upper length limit of the data packet specified in a protocol. In other words, a payload length of a data packet should be less than or equal to the upper length limit. Optionally, the first apparatus may determine the N data packets based on the upper length limit. For example, if a sum of lengths of payloads of a+1 data packets of the first service exceeds the upper length limit, and a sum of lengths of payloads of a data packets of the first service is less than or equal to the upper length limit, the first apparatus may determine that the a data packets are the N data packets.

The first header may be determined based on a header of a part of or all data packets in the N data packets. For example, the first apparatus may comprehensively determine the first header based on headers of a plurality of data packets (a part of or all data packets) in the N data packets; or the first apparatus may determine the first header based on a header of a data packet in the N data packets. For example, the first header may be determined based on a header of a second data packet in the N data packets. The second data packet is, for example, a data packet that is first transmitted or last transmitted in the N data packets, or a 1^{st} data packet, a last data packet, or any data packet in the N data packets. For descriptions of content of the 1^{st} data packet, the last data packet, or the any data packet, refer to the embodiment shown in FIG. 7.

The first header is determined based on the header of the second data packet. For example, in a manner, the first apparatus uses the header of the second data packet as the first header. This manner is simple, and can simplify a process of determining the first header.

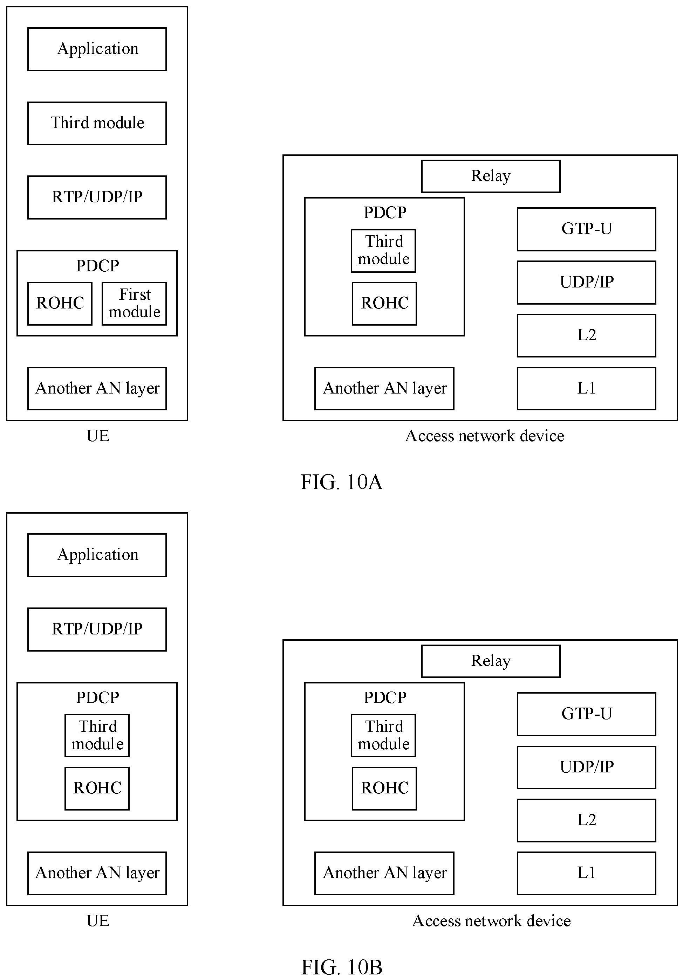

Optionally, in this embodiment of this application, a third module may be added to the first apparatus, and S901 and S902 may be performed by the third module. The third module may be a hardware module or a software module. The third module may be located in an AP or a modem of the first apparatus. For example, the third module may be an independent functional module in the AP, and the third module is, for example, located below an RTP/UDP/IP layer, as shown in FIG. 10A; or the third module may be located at an existing protocol layer in the AP, for example, the third module is located at an RTP/UDP/IP layer. For another example, the third module may be an independent functional module in the modem, for example, the third module is located above a PDCP layer; or the third module may be located at an existing protocol layer in the modem, for example, the third module is located at a PDCP layer, as shown in FIG. 10B. For other protocol layers in FIG. 10A and FIG. 10B, refer to the foregoing descriptions of FIG. 5.

For example, if the third module is located in the AP of the first apparatus, after receiving the N data packets from an application (application, APP), the third module may obtain the first data packet based on the N data packets. For a manner of obtaining the first data packet, refer to the foregoing descriptions. Then, the third module sends the first data packet to the modem of the first apparatus. The modem of the first apparatus may send the first data packet. Optionally, the modem of the first apparatus may compress the first header. For example, an ROHC module in the modem may compress the first header, and then send the first data packet with the compressed header. N may be statically configured. For example, N is predefined in a protocol, preconfigured in the first apparatus and a second apparatus, or determined by the first apparatus and a second apparatus through negotiation. In the case that N is statically configured, the third module may perform processing every time N data packets are received. N may alternatively be dynamically determined. For example, a value of N is not fixed, and the third module may continuously receive data packets from the APP, and may temporarily not perform processing after receiving the data packets. When the third module receives an indication from the modem of the first apparatus, where the indication indicates, for example, that a data packet is transmitted, or indicates that there is a resource used to send a data packet, the third module may obtain the first data packet based on the received data packets. In this case, it is considered that the received data packets are the N data packets, and the third module sends the first data packet to the modem of the first apparatus. Alternatively, if a sum of lengths of payloads of data packets that have been received by the third module is greater than the upper length limit of the data packet, the third module may obtain the first data packet based on N data packets (for example, N data packets that are received first) in the data packets that have been received, and then send the first data packet to the modem of the first apparatus. For other data packets that have been received, the third module performs processing next time.

Alternatively, if the third module is located in the modem of the first apparatus, after receiving N data packets from the AP of the first apparatus, the third module may obtain the first data packet based on the N data packets. For a manner of obtaining the first data packet, refer to the foregoing descriptions. The modem may send the first data packet. Optionally, the third module may transfer the first data packet to the ROHC module at the PDCP layer, and the ROHC module may compress the first header (this is an example in which the header compression manner is ROHC, or the first header may be compressed in another manner). If N is statically configured, every time the third module receives N data packets from the AP of the first apparatus, the third module may obtain the first data packet based on the N data packets. Alternatively, if N is dynamically determined, the third module may continuously receive data packets from the AP of the first apparatus. When there is a resource used to send a data packet, the third module obtains the first data packet based on the data packets that have been received from the AP. Alternatively, if a sum of lengths of payloads of data packets received from the AP by the third module is greater than the upper length limit of the data packet, the third module may obtain the first data packet based on N data packets (for example, N data packets that are received first) in the data packets that have been received from the AP. For other data packets that have been received from the AP, the third module performs processing next time.

It can be learned from the foregoing descriptions that, no matter whether the third module is located in the AP or the modem, the modem may perform compression on the first header, and then send the first data packet with the compressed header, to reduce transmission overheads. The compression manner is, for example, ROHC, or may be another manner. To further reduce the transmission overheads, optionally, this embodiment of this application may also be combined with the embodiment shown in FIG. 3. For example, for the first data packet, the first apparatus may compress the first header and may remove a check field included in the compressed first header, and the first apparatus may send the compressed data packet from which the check field is removed. For descriptions of specific content of this part, refer to the embodiment shown in FIG. 3.

S903. The first apparatus sends the first data packet. Correspondingly, the second apparatus receives the first data packet.

S904. The second apparatus determines headers of the N data packets based on the first header. It may be understood that the second apparatus restores the headers of the N data packets based on the first header.

Optionally, S904 may be performed by a third module in the second apparatus. In other words, in this embodiment of this application, a third module may also be disposed in the second apparatus. Refer to FIG. 10A or FIG. 10B. The third module in the second apparatus may implement a function corresponding to the third module in the first apparatus. For an implementation of the third module in the second apparatus, refer to the descriptions of the third module in the first apparatus. The third module in the first apparatus and the third module in the second apparatus may be located at a same location, for example, both located at the PDCP layer (as shown in FIG. 10B); or the third module in the first apparatus and the third module in the second apparatus may be located at different locations, for example, the third module in the first apparatus is located in the AP, and the third module in the second apparatus is located at the PDCP layer (as shown in FIG. 10A).

The second apparatus receives the first data packet, but the first data packet includes only the first header and includes no other header. In this case, the second apparatus may restore the headers of the N data packets based on the first header, so that the N data packets have respective headers. For example, if a target receiving device of the N data packets is not the second apparatus, the second apparatus needs to continue to send the N data packets (for example, the first apparatus is UE, the second apparatus is an access network device, and the target receiving apparatus is an application server that provides the first service), the second apparatus may restore the headers of the N data packets, so that the target receiving apparatus can obtain N complete data packets.

For example, the first header is determined based on the header of the second data packet. For example, if the second data packet is a 1^{st} data packet in the N data packets, the second apparatus may separately number remaining data packets based on a receiving sequence of the remaining data packets in the N data packets starting from a number indicated by the first header plus 1. For example, if a number of the 1^{st} data packet is n, remaining N-1 data packets are respectively numbered n+1, n+2, and so on based on the receiving sequence. Therefore, the second apparatus may restore the headers of the N data packets.

For another example, if the second data packet is a last data packet in the N data packets, the second apparatus may separately number remaining data packets in a reverse direction based on a receiving sequence of the remaining data packets in the N data packets starting from a number of the last data packet minus 1. For example, if the number of the last data packet is n, remaining N-1 data packets are respectively numbered n-1, n-2, and so on in a reverse direction based on the receiving sequence, where the data packet numbered n-1 is received after the data packet numbered n-2. Therefore, the second apparatus may restore the headers of the N data packets.

For another example, if the second data packet is any data packet in the N data packets, the second apparatus may predict a location of the any data packet in the N data packets. For example, the location may be negotiated by the first apparatus and the second apparatus, predefined in a protocol, or preconfigured in the first apparatus and the second apparatus. The second apparatus may separately number remaining data packets based on the location of the any data packet and a receiving sequence of the remaining data packets in the N data packets. For example, if the any data packet is a 3^{rd} data packet in the N data packets, the second apparatus may separately number first two data packets in the N data packets in a reverse direction starting from a number of the any data packet minus 1 and separately number data packets after the 3^{rd} data packet in the N data packets in a forward direction. Therefore, the second apparatus may restore the headers of the N data packets.

This embodiment of this application is combined with the embodiment shown in FIG. 3. For example, the first apparatus compresses the first header, and removes the check field included in the compressed first header. The first apparatus sends the first data packet from which the check field is removed, and the second apparatus receives the first data packet from which the check field is removed. Optionally, the second apparatus may restore the check field in the first header. For a restoration manner, refer to the embodiment shown in FIG. 3. For example, the second apparatus may determine the headers of the N data packets based on the first header after restoring the check field, or the second apparatus may first determine the headers of the N data packets based on the first header, and then restore the check field in the first header.

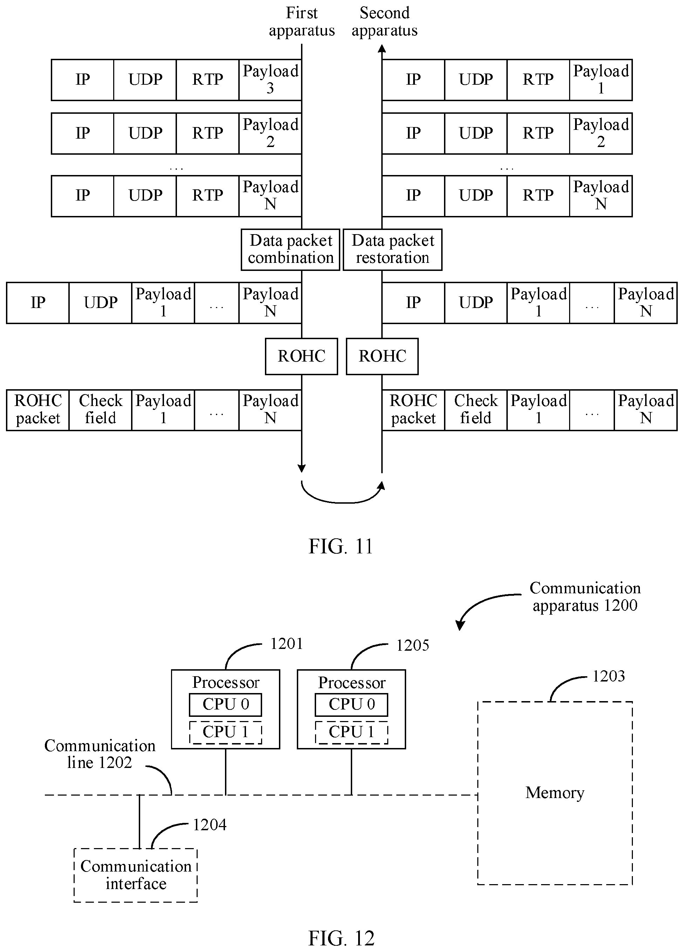

For example, FIG. 11 is an example of a processing process of the first apparatus and the second apparatus. In FIG. 11, the first apparatus obtains N data packets, and the first apparatus obtains a first data packet after processing the N data packets. The first data packet may include a first header and payloads of the N data packets (for example, a payload 1 to a payload N that are shown in FIG. 11). The first header may include an IP header, a UDP header, and an RTP header. After performing ROHC compression on the first header, the first apparatus sends the first data packet. For example, the first data packet sent by the first apparatus includes an ROHC header (the ROHC header includes, for example, a check field and an ROHC packet) and the payloads of the N data packets. FIG. 11 shows an example in which this embodiment of this application is not combined with the embodiment shown in FIG. 3, that is, the first apparatus does not remove the check field in the compressed first header. After the first data packet arrives at the second apparatus, the second apparatus may decompress the first header, and then restore headers of the N data packets based on the decompressed first header, so that the second apparatus may obtain N complete data packets.

Optionally, if the second apparatus is not a target receiving device of the N data packets, for example, the first apparatus is UE, the second apparatus is an access network device, and the target receiving device of the fourth data packet is the application server that provides the first service, the second apparatus may send the N data packets after S904. For example, the second apparatus may send the N data packets to a core network device, to send the N data packets to the application server through the core network device. Each data packet in the N data packets sent by the second apparatus may have a header.

Alternatively, if the second apparatus is a target receiving device of the N data packets, for example, the first apparatus is an access network device, and the second apparatus is UE, the second apparatus does not need to send the N data packets, and the transmission process ends.

A function of combining data packets (or combining payloads of data packets) during transmission that is provided in this embodiment of this application is, for example, a capability of the first apparatus and/or the second apparatus, which may be supported by some apparatuses, and may not be supported by some other apparatuses. Therefore, optionally, the first apparatus or the second apparatus may report capability information. The capability information may indicate whether the first apparatus or the second apparatus supports combination of data packets (or combination of payloads of data packets) during transmission. The capability information is, for example, referred to as application payload combination (application payload combination), and referred to as APC for short, or the capability information may have another name. For a manner of reporting the capability information, refer to the embodiment shown in FIG. 3. Alternatively, the first apparatus or the second apparatus may not need to report the capability information. For example, the first apparatus or the second apparatus supports combination of data packets (or combination of payloads of data packets) during transmission by default.

Optionally, the function of combining data packets (or combining payloads of data packets) during transmission that is provided in this embodiment of this application may be activated or deactivated for flexible application. For example, an access network device in the first apparatus and an access network device in the second apparatus may indicate UE in the two apparatuses to activate or deactivate the function. For content such as an activation manner, refer to related descriptions of the function of removing a check field during transmission in the embodiment shown in FIG. 3.

In conclusion, in this embodiment of this application, the payloads of the N data packets may be combined, so that the obtained first data packet may include only the first header and include no other header. In this way, transmission overheads can be reduced to a great extent, thereby helping improve network transmission performance. If the second apparatus is not the target receiving device of the N data packets, the second apparatus may further restore the headers of the N data packets based on the first header, so that the target receiving device (for example, the application server) of the N data packets can receive the N complete data packets. It can be learned that in this embodiment of this application, transmission correctness can be ensured to some extent, and transmission overheads can be reduced.

FIG. 12 is a diagram of a structure of a communication apparatus according to an embodiment of this application. The communication apparatus 1200 may be the first apparatus in the embodiment shown in any one of FIG. 3, FIG. 7, or FIG. 9, and is configured to implement the method corresponding to the first apparatus in the foregoing method embodiments. The communication apparatus 1200 may alternatively be the second apparatus in the embodiment shown in any one of FIG. 3, FIG. 7, or FIG. 9, and is configured to implement the method corresponding to the second apparatus in the foregoing method embodiments. The first apparatus is, for example, a device or a circuit system, and the second apparatus is, for example, a device or a circuit system. For example, a circuit system is a chip system.

The communication apparatus 1200 includes at least one processor 1201. The processor 1201 may be configured for internal processing of the apparatus, to implement a specific control processing function. Optionally, the processor 1201 includes instructions. Optionally, the processor 1201 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1200 includes one or more memories 1203 that is configured to store instructions. Optionally, the memory 1203 may further store data. The processor and the memory may be separately disposed, or may be integrated together.

Optionally, the communication apparatus 1200 includes a communication line 1202 and at least one communication interface 1204. Because the memory 1203, the communication line 1202, and the communication interface 1204 are all optional, the memory, the communication line, and the communication interface are all represented by dashed lines in FIG. 12.

Optionally, the communication apparatus 1200 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1200 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert a radio frequency signal into a baseband signal.

The processor 1201 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1202 may include a path for transmitting information between the foregoing components.

The communication interface 1204 is configured to communicate with another device or a communication network, for example, an Ethernet, a radio access network (radio access network, RAN), a wireless local area network (wireless local area network, WLAN), or a wired access network by using an apparatus like a transceiver.

The memory 1203 may be a read-only memory (read-only memory, ROM) or another type of static storage device that can store static information and instructions, a random access memory (random access memory, RAM) or another type of dynamic storage device that can store information and instructions, or may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer, but is not limited thereto. The memory 1203 may exist independently and is connected to the processor 1201 by using the communication line 1202. Alternatively, the memory 1203 may be integrated with the processor 1201.

The memory 1203 is configured to store computer-executable instructions used to perform the solutions of this application, and the processor 1201 controls execution. The processor 1201 is configured to execute the computer-executable instructions stored in the memory 1203, to implement the steps performed by the first apparatus or the second apparatus in the embodiment shown in any one of FIG. 3, FIG. 7, or FIG. 9.

Optionally, the computer-executable instructions in this embodiment of this application may also be referred to as application program code. This is not specifically limited in this embodiment of this application.

During specific implementation, in an embodiment, the processor 1201 may include one or more CPUs, such as a CPU 0 and a CPU 1 in FIG. 12.

During specific implementation, in an embodiment, the communication apparatus 1200 may include a plurality of processors such as the processor 1201 and a processor 1205 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

When the apparatus 1200 shown in FIG. 12 is a chip, for example, a chip of UE or a chip of an access network device, the chip includes a processor 1201 (which may further include a processor 1205), a communication line 1202, and a communication interface 1204. Optionally, the chip may include a memory 1203. Specifically, the communication interface 1204 may be an input interface, a pin, a circuit, or the like. The memory 1203 may be a register, a cache, or the like. The processor 1201 and the processor 1205 each may be a general-purpose CPU, a microprocessor, an ASIC, or one or more integrated circuits configured to control program execution of the communication method in any one of the foregoing embodiments.

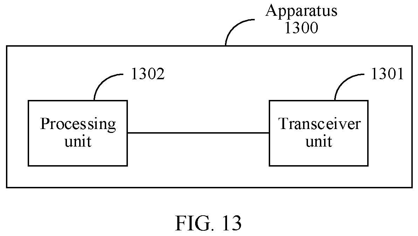

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. For example, when each functional module is obtained through division based on each corresponding function, FIG. 13 is a diagram of an apparatus. The apparatus 1300 may be the first apparatus or the second apparatus in the foregoing method embodiments. The apparatus 1300 is, for example, a device, a chip, or a chip system. The apparatus 1300 includes a processing unit 1302 and a transceiver unit 1301.

It should be understood that the apparatus 1300 may be configured to implement the steps performed by the first apparatus or the second apparatus in the communication methods in embodiments of this application. For related features, refer to the embodiment shown in any one of FIG. 3, FIG. 7, FIG. 9. Details are not described herein again.

Optionally, functions/implementation processes of the transceiver unit 1301 and the processing unit 1302 in FIG. 13 may be implemented by the processor 1201 in FIG. 12 by invoking the computer-executable instructions stored in the memory 1203. Alternatively, functions/implementation processes of the processing unit 1302 in FIG. 13 may be implemented by the processor 1201 in FIG. 12 by invoking the computer-executable instructions stored in the memory 1203, and functions/implementation processes of the transceiver unit 1301 in FIG. 13 may be implemented by the communication interface 1204 in FIG. 12.

Optionally, when the apparatus 1300 is a chip or a circuit, functions/implementation processes of the transceiver unit 1301 may alternatively be implemented through a pin, a circuit, or the like. Optionally, the transceiver unit 1301 may include a sending unit and/or a receiving unit. The sending unit is configured to implement a sending function, and the receiving unit is configured to implement a receiving function. Alternatively, the transceiver unit 1301 may be an entire module that can implement a sending function and/or a receiving function. Optionally, the transceiver unit 1301 may be implemented by using a transceiver.

This application further provides a computer-readable storage medium. The computer-readable storage medium stores a computer program or instructions. When the computer program or the instructions are run, the method performed by the first apparatus or the second apparatus in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first apparatus or the second apparatus in any one of the foregoing method embodiments.

An embodiment of this application further provides a processing apparatus, including a processor and an interface. The processor is configured to perform the method performed by the first apparatus or the second apparatus in any one of the foregoing method embodiments.

All or a part of the foregoing embodiments may be implemented by using software, hardware, firmware, or any combination thereof. When software is used to implement the foregoing embodiments, all or a part of the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by a general-purpose processor, a digital signal processor (digital signal processor, DSP), an ASIC, a field programmable gate array (field programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the first apparatus and/or the second apparatus may perform a part or all of steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, wherein the method comprises:
performing header compression on a first data packet to obtain a second data packet;
removing a check field comprised in a header of the second data packet to obtain a third data packet; and
sending the third data packet.

2. The method according to claim 1, wherein the check field is a user datagram protocol UDP checksum field.

3. The method according to claim 1 or 2, wherein the method further comprises:
sending or receiving capability information, wherein the capability information indicates that removing the check field during transmission is supported.

4. The method according to any one of claims 1 to 3, wherein the method further comprises:
sending or receiving a first message, wherein the first message indicates to activate a function of removing the check field during transmission.

5. The method according to claim 4, wherein
the method further comprises: receiving a bearer setup message from a core network apparatus, wherein the bearer setup message is used to set up a dedicated media bearer; and sending the first message comprises: sending the first message based on the bearer setup message; or
the method further comprises: receiving a second message from user equipment UE or a core network apparatus, wherein the second message indicates to start transmission of a media service; and sending the first message comprises: sending the first message based on the second message.

6. The method according to claim 5, wherein the method further comprises one or more of the following:
determining that an access network apparatus performs communication through narrowband internet of things NB-IoT;
determining that the dedicated media bearer is a bearer for communication through NB-IoT; or
determining that the media service is a service transmitted through NB-IoT.

7. A communication method, wherein the method comprises:
receiving a third data packet;
performing header decompression on the third data packet;
determining, based on the third data packet on which the header decompression is performed, that a value of a check field is a second value; and
setting a value of the check field in the third data packet on which the header decompression is performed to the second value to obtain a fourth data packet.

8. The method according to claim 7, wherein before performing the header decompression on the third data packet, the method further comprises:
adding the check field to the third data packet, wherein the value of the check field is a first value.

9. The method according to claim 7 or 8, wherein determining, based on the third data packet on which the header decompression is performed, that the value of the check field is the second value comprises:
determining that the value of the check field is the second value based on an internet protocol IP header, a UDP header, and UDP data of the decompressed third data packet.

10. The method according to any one of claims 7 to 9, wherein the method further comprises:
sending or receiving capability information, wherein the capability information indicates that removing the check field during transmission is allowed.

11. The method according to any one of claims 7 to 10, wherein the method further comprises:
sending or receiving a first message, wherein the first message indicates to activate a function of removing the UDP checksum field during transmission.

12. The method according to claim 11, wherein
the method further comprises: receiving a bearer setup message from a core network apparatus, wherein the bearer setup message is used to set up a dedicated media bearer; and sending the first message comprises: sending the first message based on the bearer setup message; or
the method further comprises: receiving a second message from UE or a core network apparatus, wherein the second message indicates to start transmission of a media service; and sending the first message comprises: sending the first message based on the second message.

13. The method according to claim 12, wherein the method further comprises one or more of the following:
determining that an access network apparatus performs communication through NB-IoT;
determining that the dedicated media bearer is a bearer for communication through NB-IoT; or
determining that the media service is a service transmitted through NB-IoT.

14. A communication method, wherein the method comprises:
sending N data packets, wherein a part of data packets in the N data packets comprise a header, a remaining data packet in the N data packets comprises no header, the part of data packets are a 1^{st} data packet in the N data packets or a part of data packets that are first transmitted in the N data packets, and N is an integer greater than or equal to 2.

15. The method according to claim 14, wherein the N data packets are all data packets corresponding to a first service or a part of data packets corresponding to the first service, wherein
the N data packets are the part of data packets corresponding to the first service, and the N data packets are data packets sent by using a resource scheduled once.

16. The method according to claim 14 or 15, wherein the method further comprises:
sending or receiving capability information, wherein the capability information indicates that removing a header of a data packet during transmission is supported.

17. The method according to any one of claims 14 to 16, wherein the method further comprises:
sending or receiving a first message, wherein the first message indicates to activate a function of removing a header of a data packet during transmission.

18. The method according to claim 17, wherein
the method further comprises: receiving a bearer setup message from a core network apparatus, wherein the bearer setup message is used to set up a dedicated media bearer; and sending the first message comprises: sending the first message based on the bearer setup message; or
the method further comprises: receiving a second message from UE or a core network apparatus, wherein the second message indicates to start transmission of a media service; and sending the first message comprises: sending the first message based on the second message.

19. The method according to claim 18, wherein the method further comprises one or more of the following:
determining that an access network apparatus performs communication through NB-IoT;
determining that the dedicated media bearer is a bearer for communication through NB-IoT; or
determining that the media service is a service transmitted through NB-IoT.

20. A communication method, wherein the method comprises:
obtaining N data packets;
obtaining a first data packet based on the N data packets, wherein the first data packet comprises payloads of the N data packets and comprises a first header, the first header is determined based on a header of a part of or all data packets in the N data packets, and N is an integer greater than or equal to 2; and
sending the first data packet.

21. The method according to claim 20, wherein the N data packets are all data packets corresponding to a first service or a part of data packets corresponding to the first service, wherein
the N data packets are the part of data packets corresponding to the first service, and the N data packets are data packets sent by using a resource scheduled once.

22. The method according to claim 20 or 21, wherein the method further comprises:
sending or receiving capability information, wherein the capability information indicates that combining payloads of data packets during transmission is supported.

23. The method according to any one of claims 20 to 22, wherein the method further comprises:
sending or receiving a first message, wherein the first message indicates to activate a function of combining payloads of data packets during transmission.

24. The method according to claim 23, wherein
the method further comprises: receiving a bearer setup message from a core network apparatus, wherein the bearer setup message is used to set up a dedicated media bearer; and sending the first message comprises: sending the first message based on the bearer setup message; or
the method further comprises: receiving a second message from UE or a core network apparatus, wherein the second message indicates to start transmission of a media service; and sending the first message comprises: sending the first message based on the second message.

25. The method according to claim 24, wherein the method further comprises one or more of the following:
determining that an access network apparatus performs communication through NB-IoT;
determining that the dedicated media bearer is a bearer for communication through NB-IoT; or
determining that the media service is a service transmitted through NB-IoT.

26. A communication method, wherein the method comprises:
receiving N data packets, wherein a part of data packets in the N data packets comprise a header, a remaining data packet in the N data packets comprises no header, and N is an integer greater than or equal to 2; and
determining a header of the remaining data packet based on the header of the part of data packets.

27. The method according to claim 26, wherein the part of data packets are a 1^{st} data packet in the N data packets or a part of data packets that are first transmitted in the N data packets.

28. The method according to claim 26, wherein the N data packets are all data packets corresponding to a first service or a part of data packets corresponding to the first service.

29. The method according to any one of claims 26 to 28, wherein the method further comprises:
sending or receiving capability information, wherein the capability information indicates that removing a header of a data packet during transmission is supported.

30. The method according to any one of claims 26 to 29, wherein the method further comprises:
sending or receiving a first message, wherein the first message indicates to activate a function of removing a header of a data packet during transmission.

31. The method according to claim 30, wherein
the method further comprises: receiving a bearer setup message from a core network apparatus, wherein the bearer setup message is used to set up a dedicated media bearer; and
sending the first message comprises: sending the first message based on the bearer setup message.

32. The method according to claim 31, wherein the method further comprises:
determining that an access network apparatus performs communication through NB-IoT; and/or
determining that the dedicated media bearer is a bearer for communication through NB-IoT.

33. The method according to claim 30, wherein
before sending the first message, the method further comprises: receiving a second message from UE or a core network apparatus, wherein the second message indicates to start transmission of a media service; and
sending the first message comprises: sending the first message based on the second message.

34. The method according to claim 33, wherein the method further comprises:
determining that an access network apparatus performs communication through NB-IoT; and/or
determining that the media service is a service transmitted through NB-IoT.

35. The method according to any one of claims 26 to 34, wherein the header is an ROHC header.

36. A communication method, wherein the method comprises:
receiving a first data packet, wherein the first data packet comprises payloads of N data packets and comprises a first header of the N data packets, the first header is determined based on a header of a part of or all data packets in the N data packets, and N is an integer greater than or equal to 2;
determining headers of the N data packets based on the first header; and restoring the first data packet to the N data packets.

37. The method according to claim 36, wherein the first header is determined based on a header of a second data packet in the N data packets, and the second data packet is a data packet that is first transmitted or last transmitted in the N data packets.

38. The method according to claim 36 or 37, wherein the N data packets are all data packets corresponding to a first service or a part of data packets corresponding to the first service.

39. The method according to any one of claims 36 to 38, wherein a sum of lengths of the payloads of the N data packets is less than or equal to an upper length limit of a data packet.

40. The method according to any one of claims 36 to 39, wherein the method further comprises:
sending or receiving capability information, wherein the capability information indicates that combining payloads of data packets during transmission is supported.

41. The method according to any one of claims 36 to 40, wherein the method further comprises:
sending or receiving a first message, wherein the first message indicates to activate a function of combining payloads of data packets during transmission.

42. The method according to claim 41, wherein the method further comprises:
receiving a bearer setup message from a core network apparatus, wherein the bearer setup message is used to set up a dedicated media bearer; and
sending the first message comprises: sending the first message based on the bearer setup message.

43. The method according to claim 42, wherein the method further comprises:
determining that an access network apparatus performs communication through NB-IoT; and/or
determining that the dedicated media bearer is a bearer for communication through NB-IoT.

44. The method according to claim 41, wherein the method further comprises:
receiving a second message from UE or a core network apparatus, wherein the second message indicates to start transmission of a media service; and
sending the first message comprises: sending the first message based on the second message.

45. The method according to claim 44, wherein the method further comprises:
determining that an access network apparatus performs communication through NB-IoT; and/or
determining that the media service is a service transmitted through NB-IoT.

46. The method according to any one of claims 36 to 45, wherein the first header is an ROHC header.

47. A communication apparatus, wherein the communication apparatus comprises a processing unit and a transceiver unit, and the processing unit is coupled to the transceiver unit, to perform the method according to any one of claims 1 to 6, perform the method according to any one of claims 7 to 13, perform the method according to any one of claims 14 to 19, perform the method according to any one of claims 20 to 25, perform the method according to any one of claims 26 to 35, or perform the method according to any one of claims 36 to 46.

48. A communication apparatus, wherein the communication apparatus comprises a processor coupled to a memory, the memory is configured to store a computer program, and the processor is configured to execute the computer program stored in the memory, to cause the communication apparatus to perform the method according to any one of claims 1 to 6, cause the communication apparatus to perform the method according to any one of claims 7 to 13, cause the communication apparatus to perform the method according to any one of claims 14 to 19, cause the communication apparatus to perform the method according to any one of claims 20 to 25, cause the communication apparatus to perform the method according to any one of claims 26 to 35, or cause the communication apparatus to perform the method according to any one of claims 36 to 46.

49. A computer-readable storage medium, wherein the computer-readable storage medium is configured to store a computer program; and when the computer program is run on a computer, the computer is caused to perform the method according to any one of claims 1 to 6, the computer is caused to perform the method according to any one of claims 7 to 13, the computer is caused to perform the method according to any one of claims 14 to 19, the computer is caused to perform the method according to any one of claims 20 to 25, the computer is caused to perform the method according to any one of claims 26 to 35, or the computer is caused to perform the method according to any one of claims 36 to 46.

50. A computer program product, wherein the computer program product comprises a computer program; and when the computer program is run on a computer, the computer is caused to perform the method according to any one of claims 1 to 6, the computer is caused to perform the method according to any one of claims 7 to 13, the computer is caused to perform the method according to any one of claims 14 to 19, the computer is caused to perform the method according to any one of claims 20 to 25, the computer is caused to perform the method according to any one of claims 26 to 35, or the computer is caused to perform the method according to any one of claims 36 to 46.

51. A chip, wherein the chip comprises:
a processor and an interface, wherein the processor is configured to invoke instructions from the interface and run the instructions; and when the processor executes the instructions, the method according to any one of claims 1 to 6 is implemented, the method according to any one of claims 7 to 13 is implemented, the method according to any one of claims 14 to 19 is implemented, the method according to any one of claims 20 to 25 is implemented, the method according to any one of claims 26 to 35 is implemented, or the method according to any one of claims 36 to 46 is implemented.
